# FASCICULE DE BREVET EUROPEEN

(11) **EP 1 095 491 B1**
(45) Date de publication et mention de la délivrance du brevet: **01.10.2008**
(21) Numéro de dépôt: 00927312.9
(22) Date de dépôt: 03.05.2000
(51) Int. Cl.: H04L 29/06, H04L 12/22

(54) **PROCEDE, SYSTEME, SERVEUR ET DISPOSITIF POUR SECURISER UN RESEAU DE COMMUNICATION**
VERFAHREN, SERVER UND VORRICHTUNG ZUR SICHERUNG EINES COMPUTERKOMMUNIKATIONSNETZES
METHOD, SERVER SYSTEM AND DEVICE FOR MAKING SAFE A COMMUNICATION NETWORK

(30) Priorité: 03.05.1999 FR 9905609
(43) Date de publication de la demande: 02.05.2001
(73) Titulaire: Everbee, 92100 Boulogne Billancourt (FR)
(72) Inventeur: STERN, Michael, 75015 Paris (FR); STEHLE, Nicolas, 75015 Paris (FR); STEHLE, Jean-Luc, 75015 Paris (FR)
(74) Mandataire: Kohn, Philippe
(86) Numéro de dépôt international: PCT/FR2000/001184
(87) Numéro de publication internationale: WO 2000/067445

(56) Documents cités:
- WO-A-98/07255
- US-A- 5 349 643
- US-A- 5 473 692
- US-A- 5 586 260
- US-A- 5 802 178
- US-A- 5 828 833

## Description

Alors qu'un nombre croissant de sociétés se connectent à des réseaux et en particulier à Internet, la sécurité sur les réseaux informatiques devient un enjeu considérable à l'aube du vingt et unième siècle. De nombreux problèmes apparaissent dans les entreprises et autres organisations. Ces problèmes sont habituellement désignés sous le terme de piratage informatique ; les personnes qui en sont responsables sont désignées par le terme de pirate.

Ce piratage informatique possède plusieurs facettes. Par exemple il peut être effectué de l'extérieur ou de l'intérieur de 'l'entreprise', ce terme 'entreprise' désignant une société de nature industrielle ou commerciale, un organisme gouvernemental ou tout autre association d'intérêt. Il peut en outre avoir divers objectifs : altérer, supprimer, prendre connaissance de données (lecture, modification ou destruction) ; ou empêcher le bon fonctionnement du réseau informatique (notamment en gênant à distance le fonctionnement des ordinateurs indispensables).

Avant de continuer, il convient d'exposer les méthodes de piratage que l'on pourrait qualifier de physiques car elles reposent sur les caractéristiques physiques des systèmes informatiques.

La première et la plus simple de ces méthodes physiques s'appelle dans le jargon informatique le 'sniffing'. Elle correspond à un espionnage physique des câbles de connexion. Le pirate peut ainsi capturer toute l'information qui transite au sein de ce réseau. Le pirate peut obtenir des informations cruciales : informations confidentielles de toute nature, mots de passe des utilisateurs du réseau. Il peut également altérer ou supprimer ces données.

Une deuxième méthode de piratage physique nécessite de très gros moyens. Elle repose sur l'interception des ondes électromagnétiques émises par un écran d'ordinateur (ou émises par n'importe quel élément du système informatique).

Une autre méthode de piratage physique consiste à prendre connaissance du texte tapé par la simple observation lors de sa frappe sur le clavier où lors de son apparition à l'écran. (Observation directe ou indirecte de l'utilisateur).

Ces méthodes physiques sont indécelables pour le système informatique et sont indépendantes de ce système.

Hormis ces méthodes physiques, le piratage informatique peut également reposer sur des méthodes qui seront qualifiées de méthodes logiques. Ces méthodes s'attaquent directement à la logique des systèmes informatiques.

Généralement elles utilisent les points faibles de cette logique. La plupart de ces méthodes utilisent souvent ce que l'on appelle une trappe, c'est-à-dire une faille dans un système d'exploitation ou dans un autre logiciel. Ces trappes sont des points d'entrée dans un système informatique qui passent au-dessus des mesures normales de sécurité. Ce peut être un programme caché au sein du système informatique ou un composant électronique qui rendent le système de protection inefficace. De plus, la trappe est souvent activée par un évènement ou une action "normale". La trappe peut aussi être une faille volontaire du système de sécurité. Dans ce cas les trappes ne sont pas toujours néfastes : certains systèmes d'exploitation ont des comptes utilisateurs avec de hauts privilèges destinés à faciliter le travail des techniciens de maintenance.

Pour comprendre ces méthodes logiques il faut se rappeler qu'à chaque fois qu'un utilisateur fait une requête pour accéder à un fichier ou plus généralement à une ressource informatique, le système d'exploitation décide si cet utilisateur a bien le droit d'accéder à ce fichier. Le système d'exploitation prend cette décision en fonction de plusieurs critères tels le propriétaire du fichier, l'identification de la personne qui demande à y accéder, les permissions d'accès qui ont été déterminées par le propriétaire. Le pirate doit donc, pour obtenir les informations désirées, tromper le système informatique en interférant avec sa logique.

La création d'une liste exhaustive des méthodes utilisées pour pirater des données informatiques ou un réseau est pratiquement irréalisable tant ces méthodes sont nombreuses. Il faut souligner cependant qu'elles comportent malgré tout des points communs et plus particulièrement une logique commune. Ceci a permis de déterminer des méthodes générales afin de contrer ces pirates.

Une première méthode connue pour lutter contre le piratage logique consiste à demander à l'utilisateur de fournir un mot de passe pour accéder aux données, mot de passe qui est reconnu par le système d'exploitation. Ce mot de passe est numérique. Il reste aujourd'hui la clé de voûte de tous les systèmes de sécurité. Il en constitue donc aussi son principal point faible : un pirate connaissant le mot de passe d'un utilisateur peut accéder aux données personnelles de cet utilisateur et peut se faire passer pour cet utilisateur ce qui est bien pire. Toute action, erreur, faute ainsi commise par le pirate sera donc attribuée de manière erronée à l'utilisateur piraté.

Une autre méthode connue pour lutter contre le piratage consiste à crypter les données. Cette méthode est souvent considérée comme suffisante. Ce chiffrement est actuellement réalisé à l'aide de logiciels ou de cartes électroniques. Le principe du chiffrement repose sur l'utilisation d'une clé de chiffrement. Cette clé de chiffrement constitue l'un des points faibles de cette méthode. Avec cette méthode lorsque deux ordinateurs veulent communiquer, ils doivent d'abord s'authentifier l'un à l'autre, c'est-à-dire utiliser une clé commune de chiffrement. Ce processus d'authentification est actuellement numérique et repose soit sur un code tapé par l'utilisateur soit sur un code généré de manière logique par les deux ordinateurs. Dans ce deuxième cas, les deux ordinateurs sont malheureusement obligés d'échanger une suite d'informations jusqu'à s'authentifier réciproquement. Il en découle qu'un troisième ordinateur venant pirater ce système peut retrouver le code généré en prenant connaissance de cet échange d'informations. Ce faisant, il peut avoir accès aux données transmises et peut même usurper l'identité des machines piratées.

Le chiffrement des données est aussi utilisé pour rendre incompréhensible les informations contenues sur un support de données d'un ordinateur. Dans ce cas, les clés de chiffrement sont générées de la même façon que dans le cas du chiffrement des transmissions.

Toutes les méthodes de chiffrement actuellement utilisées reposent sur des algorithmes mathématiques. Il existe deux catégories d'algorithme de chiffrement : les algorithmes symétriques et les algorithmes asymétriques. L'algorithme symétrique utilise une seule clé de chiffrement qui sert donc simultanément à crypter et à décrypter les données. A l'inverse l'algorithme asymétrique utilise deux clés : une clé publique et une clé privée. Dans cette seconde méthode de chiffrement chaque utilisateur possède deux clés : une clé privée et une clé publique. Sa clé publique est connue de tous les autres utilisateurs. Elle permet de crypter le message, mais pas de le décrypter. Sa clé privée n'est connue que de lui seul, et reste inconnue des autres utilisateurs. Elle permet de décrypter le message chiffré.

On peut utiliser un système asymétrique pour un protocole d'échange de clé c'est-à-dire un protocole permettant à deux utilisateurs de se mettre d'accord sur une clé de chiffrement symétrique à utiliser pour le chiffrement proprement dit.

Un exemple de tel protocole est détaillé dans les brevets US-4200770 et CA-1121480. A titre d'exemple et pour la bonne compréhension du présent document cet algorithme asymétrique est décrit ci après.

Dans la suite du présent document la notation g^a[N] représente g puissance a modulo N

Soient A et B deux utilisateurs de l'algorithme. Chaque utilisateur possède une clé privée confidentielle, par exemple 'a' pour A et 'b' pour B. Les nombres g^a [N] et g^b [N] sont connus de tous. Les nombres g et N sont fixés et choisis une fois pour toute par A et B, de façon à ce que le groupe multiplicatif des puissances successives de g modulo N ait un très grand nombre d'éléments. En pratique, on choisit pour N un très grand nombre premier ayant par exemple une centaine de chiffres décimaux et tel que (N-1)/2 soit premier, et que g soit une racine primitive modulo N c'est-à-dire un générateur du groupe multiplicatif modulo N.

Lorsque A veut communiquer avec B de façon à n'être compréhensible que par B, A prend la clé publique de B : g^b et l'élève à la puissance 'a' (toujours modulo N) ce qui forme g^(ba) et fournit ainsi la clé de chiffrement pour un algorithme symétrique. B est seul à pouvoir comprendre le message en faisant (g^a)^b = g^(ab) = g^(ba) [N] .

Cette méthode fonctionne car il n'y a aucun algorithme connu pour résoudre en un temps raisonnable l'équation en 'x' : g^x=d [N] lorsque N est très grand.

Les clés privées 'a' et 'b' de A et B sont usuellement générées par des générateurs aléatoires de nombres lors de la première communication entre les deux interlocuteurs. Ces nombres n'étant pas toujours mémorisés, il faut alors les re-générer régulièrement.

Les algorithmes de chiffrement actuellement utilisés sont très performants. Par contre l'authentification des utilisateurs n'est pas pleinement satisfaisante. Dans le cas d'une authentification directe entre deux dispositifs de chiffrement (donc sans intervention humaine) un troisième dispositif de chiffrement peut réussir à se faire passer pour l'un des deux autres dispositifs et peut ainsi accéder aux données de l'autre ordinateur, comme déjà mentionné. Dans le cas où l'authentification nécessite un code tapé par l'utilisateur au clavier de son ordinateur, ce code peut être intercepté par un pirate ou peut être observé directement lorsqu'on le tape au clavier.

Il existe une troisième méthode connue pour contrer le piratage. Cette méthode concerne la protection des réseaux internes. Pour empêcher les intrus de pénétrer un réseau interne plusieurs sociétés ont mis sur le marché des écluses (plus communément appelées par les informaticiens " FireWall " ). Il s'agit d'une barrière logique entre le réseau de l'entreprise et un réseau non sécurisé (Internet, par exemple). Une écluse est un dispositif placé sur un ordinateur spécifique qui empêche les accès non autorisés aux ressources d'informations du réseau interne. En d'autres termes, une écluse fonctionne comme une passerelle contrôlant les informations circulant dans les deux directions. Elle permet d'empêcher certains utilisateurs extérieurs d'accéder à certaines données ou ressources logicielles du réseau interne. Ainsi les problèmes de sécurité du réseau interne vis à vis de l'extérieur sont normalement confinés en un seul point du réseau : l'écluse.

Cette écluse, si elle est bien utilisée (ce qui est, hélas, très rarement le cas) est impénétrable de façon logique. Il faudra donc avoir recours à une autre approche : le pirate va par exemple empêcher l'ordinateur hébergeant l'écluse de fonctionner correctement en le saturant par l'envoi abondant de messages qui vont forcer cet ordinateur à dépasser ses capacités de traitement de l'information. Si cet ordinateur ne fonctionne plus, le pirate peut alors pénétrer dans le réseau qui n'est plus sécurisé par l'écluse.

De plus, une écluse ne protège pas d'un éventuel pirate travaillant directement au sein du réseau. Ce cas n'est malheureusement pas exceptionnel et selon le FBI, près de 80% du piratage serait du à une personne ayant un accès interne au réseau.

Pour lutter contre le piratage informatique outre les techniques de préventions mentionnées précédemment on peut également tenter de retrouver l'auteur de ce piratage. On peut s'aider des traces informatiques qu'il laisse : ouverture de fichiers, connexions Internet, connexions aux serveurs... En effet, la plupart des manipulations informatiques laissent des traces numériques dans les systèmes d'exploitation. Malheureusement ces traces sont assez faciles à dissimuler : Prendre l'identité de quelqu'un en utilisant son mot de passe, emprunter un poste de travail pour faire accuser quelqu'un d'autre sont des techniques classiques du pirate et sont très faciles à mettre en oeuvre. En effet aujourd'hui l'authentification de l'utilisateur se fait par le biais de son identifiant numérique mais non pas par la reconnaissance de la personne physique. Il en résulte que l'on n'a jamais de certitude absolue quant à l'identité de l'utilisateur d'un ordinateur.

Pour augmenter le degré d'authentification d'un utilisateur, plusieurs sociétés utilisent les techniques bancaires d'authentification : les cartes à puce. De nouvelles méthodes d'authentification physique, comme la vérification de la rétine ou des empreintes digitales de l'utilisateur, existent mais sont encore peu utilisées car leur fiabilité est encore peu connue.

En résumé, il est possible d'affirmer que les méthodes actuelles de sécurisation d'un réseau informatique présentent des inconvénients certains. En effet elles reposent sur des systèmes d'exploitation possédant des failles de sécurité, sur des authentifications imparfaites des utilisateurs. De plus, bien que l'on redoute essentiellement des problèmes de sécurité extérieurs aux entreprises ou aux organismes informatisés, il faut malheureusement également considérer que ces problèmes ont très souvent une source interne. Une méthode satisfaisante de sécurisation d'un réseau informatique se doit donc de protéger ce réseau à la fois contre le piratage externe et contre le piratage interne.

Il est connu par le document US 5,586,260 un procédé et un dispositif pour authentifier un client par un serveur, lorsque le client et le serveur mettent en oeuvre des mécanismes différents. Il est également connu par le document WO 98/07255 un dispositif portable de chiffrement des communications et d'authentification d'un utilisateur.

La présente invention a pour but de remédier aux principaux problèmes de sécurité suscités des réseaux internes d'une entreprise ou de toute autre association d'intérêt.

A cet effet, la présente invention fournit un procédé permettant de sécuriser de manière répartie et dynamique un réseau de communication notamment du type Internet **caractérisé en ce qu**'il comprend les étapes suivantes :
- l'étape d'interconnecter un dispositif entre chaque équipement informatique devant tre sécurisé et le réseau de communication,
- l'étape d'intercepter les communications entre un équipement informatique muni du dispositif et le réseau de communication au moyen dudit dispositif auquel cet équipement est connecté,
- l'étape d'obtenir des informations concernant un utilisateur de l'équipement informatique au moyen d'un module d'authentification associé audit dispositif,
- l'étape de définir un niveau de sécurité du dispositif cité ci-dessus au moyen du module d'authentification associé au dispositif,
- l'étape de transmettre les informations concernant l'utilisateur et le niveau de sécurité du dispositif à un serveur de gestion des authentifications connecté au réseau,
- l'étape de traiter au moyen du serveur lesdites informations concernant l'utilisateur et ledit
   niveau de sécurité du dispositif et d'authentifier l'utilisateur à l'aide desdites informations,
- l'étape de gérer les authentifications et les niveaux de sécurité au moyen du serveur de gestion des authentifications,
- l'étape de transmettre du serveur vers les dispositifs du réseau des paramètres de sécurité,
- l'étape de mémoriser au moyen des dispositifs lesdits paramètres de sécurité provenant du serveur,
- l'étape de traiter au moyen des dispositifs lesdits paramètres de sécurité provenant du serveur.

Ceci permet de connaître à tout moment l'identité de l'utilisateur du dispositif selon l'invention. Ainsi l'authentification de l'utilisateur se fait en deux étapes : le module d'authentification envoie des informations sur l'utilisateur (par exemple le fait qu'il se soit correctement authentifié grâce à telle carte à puce, ou encore ses empreintes digitales ou une image de sa rétine). Ces informations sont propres à chaque utilisateur et sont envoyées au serveur de gestion des authentifications. Ce serveur vérifie alors que l'utilisateur en question a le droit d'utiliser l'élément du réseau équipé du dispositif selon l'invention qui vient d'envoyer la demande d'authentification. Le serveur renvoie alors au dispositif selon l'invention son accord ou signale que l'utilisateur n'est pas habilité à utiliser ledit élément du réseau.

Ce procédé permet d'obtenir une sécurité répartie et dynamique sur un réseau informatique. En effet, la sécurité s'appuie sur des dispositifs interconnectés entre chaque équipement informatique devant être sécurisé et le réseau de communication. La sécurité de ces dispositifs est gérée par un serveur central qui reçoit des informations de tous les dispositifs. Le serveur peut donc choisir une politique globale de sécurité qui sera ensuite appliquée au niveau de chacun des dispositifs.

Cette sécurité est configurable et peut évoluer dans le temps en fonction des nouveaux besoins ou des nouveaux modes d'attaque

En effet, l'envoi de cette liste de paramètres de sécurité par un serveur de gestion des authentifications permet une gestion plus souple du réseau. Les informations envoyées peuvent être modifiées très simplement sur le serveur d'authentification. On peut ainsi aisément modifier les habilitations d'accès des utilisateurs.

Il faut bien noter que les paramètres de sécurité dépendent de :
- l'utilisateur,
- de l'élément du réseau qu'il désire utiliser,
- du niveau de sécurité qu'il a sélectionné,
- de la date et de l'heure,
- de l'état du réseau
- et de tous les paramètres de sécurité déjà fournis aux dispositifs.

En revanche, un mode de réalisation utilisant un support de données propre à chaque utilisateur et contenant la liste citée ci-dessus ne permet pas une gestion simple du réseau : toute modification des paramètres de sécurité d'un utilisateur demande la modification des données contenues sur son support personnel de données.

L'adresse du serveur de gestion des authentifications est soit fournie par l'utilisateur du dispositif soit déjà mémorisée dans le dispositif.

Avantageusement, les paramètres de sécurité comprennent :
- une liste d'applications informatiques client/serveur autorisées,
- des informations permettant aux dispositifs d'analyser les messages concernant lesdites applications client/serveur.

Avantageusement, le procédé selon l'invention comprend :
- l'étape d'analyser au moyen du dispositif les messages concernant lesdites applications client/serveur,
- l'étape de filtrer au moyen du dispositif les messages concernant lesdites applications client/serveur,
- l'étape de modifier au moyen du dispositif les messages concernant lesdites applications client/serveur.

Le filtrage des messages peut ainsi éliminer les paquets d'informations qui ne sont pas conformes au protocole de communication utilisé sur le réseau informatique. En effet, un paquet d'informations d'un protocole de communication spécifique (par exemple TCP/IP, FTP, POP, etc.) possède certaines propriétés qui sont faciles à vérifier. Si le paquet ne les possède pas, il est considéré comme invalide. Ce travail est habituellement effectué par le système d'exploitation ou par une écluse. Le dispositif selon l'invention peut donc soulager la tâche de l'élément du réseau auquel il est connecté.

Il faut savoir que le pirate informatique utilise souvent des paquets mal formés envoyés en grand nombre sur la machine à pirater afin d'augmenter la charge de travail de cette machine dans le but de gêner son fonctionnement.

Les paramètres de sécurité permettant d'analyser les messages concernant lesdites applications client/serveur peuvent contenir une liste de ports de communication. Il faut savoir que chaque logiciel ayant besoin de communiquer avec le réseau utilise un certain port de communication. Par exemple pour lire du courrier électronique, il faut utiliser un port bien précis, pour lire des sites Internet, il faut en utiliser un autre.

Ainsi, une simple liste de ports de communication permet déjà de bien caractériser une application.

Les pirates utilisent souvent un cheval de Troie, c'est-à-dire un programme placé sur la machine cible qui permettra au pirate d'y effectuer certaines tâches. Or un cheval de Troie a besoin d'un port de communication pour recevoir les ordres de son créateur. Lorsqu'un paquet transite par le dispositif, les moyens de traitement du dispositif vérifient que ce paquet utilise un port autorisé. Ainsi, on peut empêcher un utilisateur donné d'aller sur Internet ou empêcher un cheval de Troie de discuter avec son créateur.

Ce procédé permet d'obtenir une écluse gérée par un serveur et répartie sur tout le réseau. Cette écluse possède en outre des propriétés particulières pour chaque équipement informatique équipé du dispositif.

Avantageusement, les paramètres de sécurité comprennent en outre :
- une liste d'équipements informatiques avec lesquels l'utilisateur est habilité à communiquer.

Avantageusement le procédé selon l'invention comprend en outre les étapes suivantes :
- l'étape de laisser transmettre par le dispositif des messages entre l'équipement informatique auquel il est connecté et les équipements informatiques avec lesquels l'utilisateur est habilité à communiquer,
- l'étape de bloquer par le dispositif des messages entre l'équipement informatique auquel il est connecté et les équipements informatiques avec lesquels l'utilisateur n'est pas habilité à communiquer.

Le filtrage des messages est d'abord effectué selon la liste des éléments du réseau avec lesquels l'utilisateur de l'invention est habilité à communiquer. Car, il faut se souvenir que chaque paquet d'informations contient l'adresse de l'expéditeur ou du destinataire. Ainsi, un utilisateur ne pourra ni recevoir, ni envoyer de messages aux équipements informatiques n'appartenant pas à sa liste d'adresses.

Ce procédé permet de créer un système de cloisonnement des éléments du réseau.

Avantageusement le procédé selon l'invention comprend en outre les étapes suivantes :
- l'étape de personnaliser le dispositif à l'aide d'une clé privée de chiffrement fournie au moyen du module d'authentification,
- l'étape de mémoriser au moyen du serveur toutes les clés publiques de chiffrement associées aux clés privées de chiffrement qui personnalisent les dispositifs.

Avantageusement, les paramètres de sécurité comprennent en outre :
- une liste d'équipements informatiques avec lesquels l'utilisateur est habilité à communiquer de manière chiffrée,
- la clé publique de chiffrement de chaque équipement informatique avec lequel l'utilisateur est habilité à communiquer de manière chiffrée.

Avantageusement le procédé selon l'invention comprend en outre les étapes suivantes :
- l'étape de chiffrer au moyen du dispositif les communications par combinaison de la clé privée de chiffrement dudit dispositif avec la clé publique de chiffrement de l'équipement informatique avec lequel l'utilisateur est habilité à communiquer de manière chiffrée.

Dans ce mode de fonctionnement, chaque dispositif est personnalisé par une clé privée de chiffrement permettant d'effectuer un protocole d'échange de clé de chiffrement. Cette clé privée est associée à une clé publique de chiffrement inscrite dans la liste des équipements informatiques avec lesquels l'utilisateur est habilité à communiquer de manière chiffrée.

Pour rappel, si l'on utilise l'algorithme asymétrique du brevet US-4200770, la clé privée s'écrit 'a' et la clé publique s'écrit g^a [N].
la présente invention fournit un système permettant de sécuriser de manière répartie et dynamique un réseau de communication notamment du type Internet **caractérisé en ce qu**'il comprend:
- un dispositif interconnecté entre chaque équipement informatique devant être sécurisé et le réseau de communication,
- ledit dispositif comportant deux interfaces d'entrée/sortie pour intercepter les communications entre un équipement informatique auquel il est connecté et le réseau de communication,
- ledit dispositif comportant en outre un module d'authentification pour obtenir des informations concernant un utilisateur de l'équipement informatique auquel le dispositif est connecté,
- ledit module permet de définir un niveau de sécurité dudit dispositif,
- ledit dispositif comportant des moyens pour transmettre les informations concernant l'utilisateur et le niveau de sécurité du dispositif,
- un serveur de gestion des authentifications connecté au réseau comportant des moyens de traitement pour traiter lesdites informations et ledit niveau de sécurité et authentifier l'utilisateur à l'aide desdites informations,
- ledit serveur comportant des moyens de gestion pour gérer les authentifications et les niveaux de sécurité,
- ledit serveur comportant des moyens pour transmettre aux dispositifs du réseau des paramètres de sécurité,
- lesdits dispositifs comportant des moyens de mémorisation pour mémoriser lesdits paramètres de sécurité,
- lesdits dispositifs comportant des moyens de traitement pour traiter lesdits paramètres de sécurité.

Avantageusement les paramètres de sécurité comprennent :
- une liste d'applications informatiques client/serveur autorisées,
- des informations permettant aux dispositifs d'analyser les messages concernant lesdites applications client/serveur.

Avantageusement les moyens de traitement du dispositif comprennent:
- des moyens pour analyser les messages concernant lesdites applications client/serveur,
- des moyens pour filtrer les messages concernant lesdites applications client/serveur,
- des moyens pour modifier les messages concernant lesdites applications client/serveur.

Avantageusement les paramètres de sécurité comprennent :
- une liste d'équipements informatiques avec lesquels l'utilisateur est habilité à communiquer.

Avantageusement lesdits moyens de traitement du dispositif comprennent :
- des moyens pour laisser transmettre des messages entre l'équipement informatique auquel ledit dispositif est connecté et les équipements informatiques avec lesquels l'utilisateur est habilité à communiquer,
- des moyens pour bloquer des messages entre l'équipement informatique auquel ledit dispositif est connecté et les équipements informatiques avec lesquels l'utilisateur n'est pas habilité à communiquer.

Avantageusement le système selon l'invention comprend :
- un module d'authentification associé au dispositif personnalisé au moyen d'une clé privée de chiffrement qui personnalise le dispositif auquel il est associé,
- un serveur mémorisant toutes les clés publiques de chiffrement associées aux clés privées de chiffrement qui personnalisent les dispositifs.

Avantageusement les paramètres de sécurité comprennent:
- une liste des équipements informatiques avec lesquels l'utilisateur est habilité à communiquer de manière chiffrée,
- la clé publique de chiffrement de chaque équipement informatique avec lequel l'utilisateur est habilité à communiquer de manière chiffrée.

Avantageusement les dispositifs comprennent:
- un module de chiffrement pour chiffrer les communications par combinaison de la clé privée de chiffrement du dispositif avec la clé publique de chiffrement de l'équipement informatique avec lequel l'utilisateur est habilité à communiquer de manière chiffrée.
la présente invention fournit un serveur permettant de sécuriser de manière répartie et dynamique un réseau de communication notamment du type Internet **caractérisé en ce qu**'il comprend:
- des moyens de traitement pour traiter des informations provenant d'un dispositif et concernant un utilisateur d'un équipement informatique auquel est connecté ce dispositif,
- lesdits moyens de traitement permettent d'authentifier l'utilisateur à l'aide desdites informations,
- des moyens de gestion pour gérer les authentifications,
- des moyens de transmission pour transmettre aux dispositifs du réseau des paramètres de sécurité.

Avantageusement, les paramètres de sécurité comprennent :
- une liste d'applications informatiques client/serveur autorisées,
- des informations permettant aux dispositifs d'analyser les messages concernant lesdites applications client/serveur.

Avantageusement, les paramètres de sécurité comprennent :
- une liste d'équipements informatiques avec lesquels l'utilisateur est habilité à communiquer.

Avantageusement, le serveur selon l'invention comprend :
- des moyens de mémorisation pour mémoriser toutes les clés publiques de chiffrement associées aux clés privées de chiffrement qui personnalisent les dispositifs.

Avantageusement, les paramètres de sécurité comprennent:
- une liste des équipements informatiques avec lesquels l'utilisateur est habilité à communiquer de manière chiffrée,
- la clé publique de chiffrement de chaque équipement informatique avec lequel l'utilisateur est habilité à communiquer de manière chiffrée.

La présente invention fournit un dispositif de sécurisation d'un réseau de communication, interconnecté entre chaque équipement informatique devant être sécurisé et ledit réseau et **caractérisé en ce qu**'il comprend:
- deux interfaces d'entrée/sortie pour intercepter les communications entre un équipement informatique auquel il est connecté et le réseau de communication,
- un module d'authentification pour obtenir des informations concernant un utilisateur de équipement informatique auquel est connecté ledit dispositif et pour définir le niveau de sécurité dudit dispositif,
- des moyens pour transmettre les informations concernant l'utilisateur et le niveau de sécurité du dispositif vers un serveur de gestion des authentifications,
- des moyens de mémorisation pour mémoriser des paramètres de sécurité provenant du serveur,
- des moyens de traitement pour traiter lesdits paramètres de sécurité provenant du serveur.

Avantageusement, les paramètres de sécurité comprennent:
- une liste d'applications informatiques client/serveur autorisées,
- des informations permettant aux dispositifs d'analyser les messages concernant lesdites applications client/serveur.

Avantageusement, lesdits moyens de traitement du dispositif comprennent:
- des moyens pour analyser les messages concernant lesdites applications client/serveur,
- des moyens pour filtrer les messages concernant lesdites applications client/serveur,
- des moyens pour modifier les messages concernant lesdites applications client/serveur.

Avantageusement, les paramètres de sécurité comprennent :
- une liste d'équipements informatiques avec lesquels l'utilisateur est habilité à communiquer.

Avantageusement, lesdits moyens de traitement du dispositif comprennent:
- des moyens pour laisser transmettre des messages entre l'équipement informatique auquel est connecté le dispositif et les équipements informatiques avec lesquels l'utilisateur est habilité à communiquer,
- des moyens pour bloquer des messages entre l'équipement informatique auquel est connecté le dispositif et les équipements informatiques avec lesquels l'utilisateur n'est pas habilité à communiquer.

Avantageusement, le module d'authentification associé audit dispositif fournit :
- une clé privée de chiffrement qui personnalise ledit dispositif.

Avantageusement, les paramètres de sécurité comprennent en outre :
- une liste des équipements informatiques avec lesquels l'utilisateur est habilité à communiquer de manière chiffrée,
- la clé publique de chiffrement de chaque équipement informatique avec lequel l'utilisateur est habilité à communiquer de manière chiffrée.

Avantageusement, le dispositif selon l'invention comprend:
- un module de chiffrement pour chiffrer les communications par combinaison de la clé privée de chiffrement dudit dispositif avec la clé publique de chiffrement de l'équipement informatique avec lequel l'utilisateur est habilité à communiquer de manière chiffrée.

Ainsi, un équipement informatique peut communiquer avec un autre équipement informatique de façon chiffrée. Le paquet à envoyer est chiffré par un module de chiffrement à l'aide de la clé de chiffrement correspondant à l'adresse de l'autre équipement informatique. Le paquet reçu du réseau est déchiffré par la clé privée de chiffrement du dispositif.

Pour mieux faire comprendre l'invention, on va en décrire maintenant, à titre d'exemple purement illustratif et non limitatif, plusieurs modes de réalisation.

Sur le dessin :
La figure 1 représente un schéma général d'un réseau informatique sécurisé par l'invention.
La figure 2 représente un schéma général d'un premier mode de réalisation du dispositif selon l'invention.
La figure 3 représente un schéma général d'un second mode de réalisation du dispositif selon l'invention.
La figure 4 représente le deuxième mode de réalisation du dispositif selon l'invention lorsqu'il est implanté dans un ordinateur.
La figure 5 représente le deuxième mode de réalisation du dispositif selon l'invention lorsqu'il est à l'extérieur d'un élément informatique sous forme d'un module externe.
La figure 6 représente un mode de réalisation du module de cryptage 7.
Les figures 7 et 8 représentent un mode de réalisation du dispositif selon l'invention lorsqu'il est miniaturisé dans une puce.

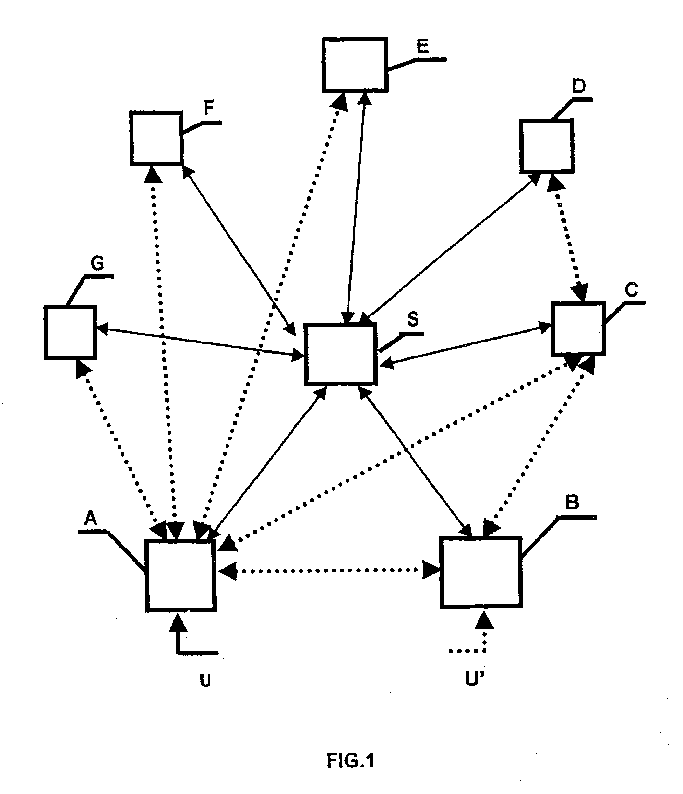

La figure 1 représente un schéma général d'un réseau sécurisé par l'invention. Ce peut être un réseau interne d'une entreprise, un réseau public comme Internet ou un réseau mixte, c'est à dire un ou plusieurs réseaux internes ou externes reliés entre eux. Ce réseau est constitué de 7 éléments informatiques notés A, B, C, D, E, F, G qui peuvent être un ordinateur, un serveur informatique, un ordinateur portable, un serveur d'impression, une imprimant.... Ces éléments informatiques sont équipés du dispositif selon l'invention. Ce réseau possède un serveur S de gestion des authentifications. Deux utilisateurs de ce réseau ont été représentés : un utilisateur U utilisant l'élément A du réseau et un utilisateur U' pouvant utiliser l'élément B du réseau.

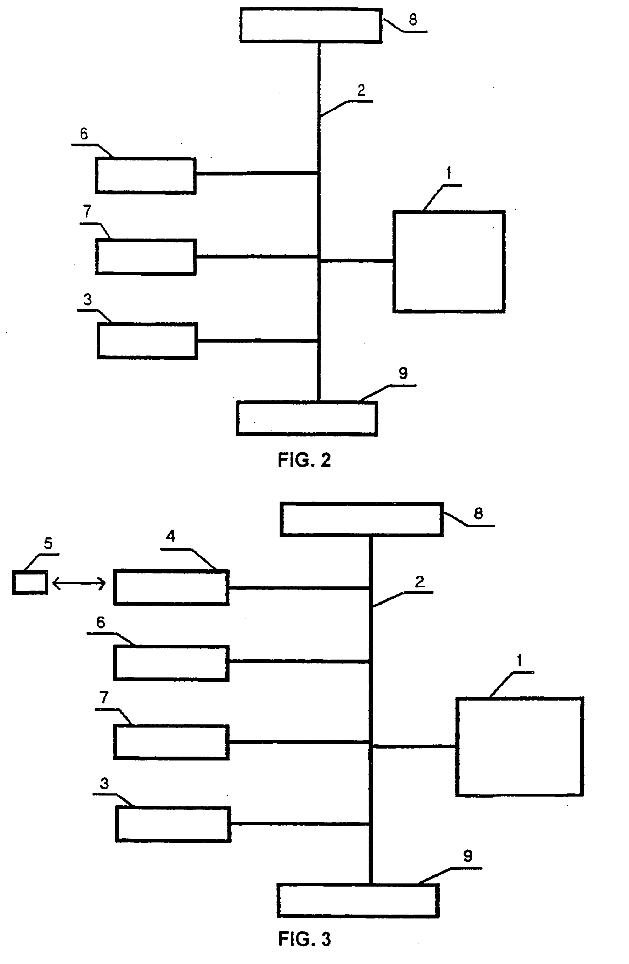

La figure 2 représente un schéma général d'un premier mode de réalisation du dispositif selon l'invention, constitué d'un microprocesseur 1, relié par un bus de données 2 à une mémoire 3, à deux interfaces d'entrée/sortie 8 et 9, à un module d'authentification 6 de l'utilisateur et à un module de cryptage 7.

La figure 3 représente un schéma général d'un second mode de réalisation du dispositif selon l'invention où l'on a ajouté un lecteur de données 4 relié à un bus de données 2 et un support de données 5 propre à chaque utilisateur.

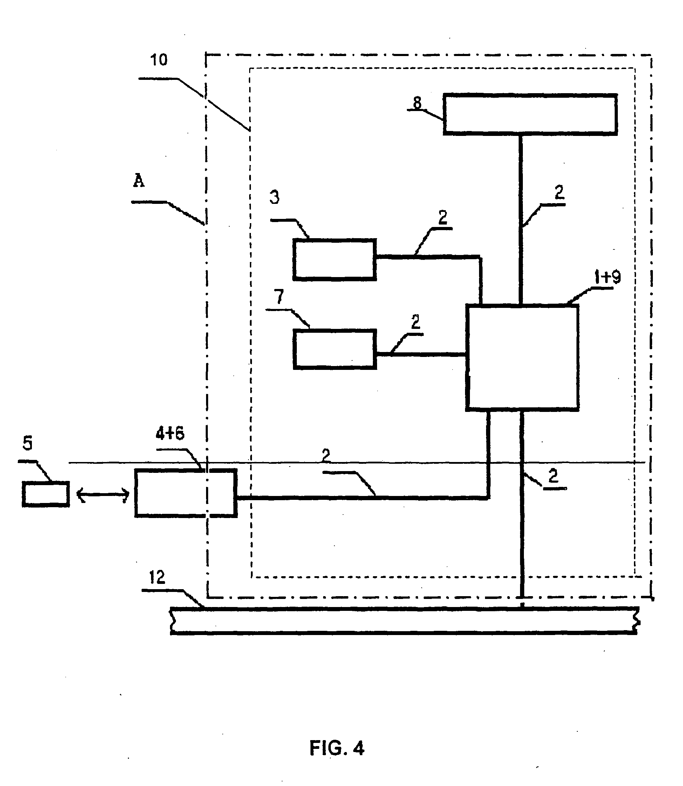

La figure 4 montre le cas où le dispositif selon l'invention est placé dans un ordinateur A connecté à un réseau ethernet 12 utilisant le protocole de communication : 'Protocole de vérification du Transport' communément appelé 'Transport Control Protocol' ou TCP dans le cadre du 'protocole Internet' communément appelé Internet Protocol ou IP qui sera désigné par la suite comme le protocole de communication TCP/IP.

Le dispositif selon l'invention est alors constitué d'une carte électronique 10 qui est placée dans l'ordinateur A et qui porte le microprocesseur 1, le module de cryptage 7, les deux interfaces d'entrée/sortie 8 et 9 (ce dernier éventuellement inclus dans 1) et la mémoire 3. Le microprocesseur 1 est relié par une liaison série à un lecteur de carte à puce possédant un clavier. Ce lecteur constitue à la fois le lecteur de données 4 et le module d'authentification 6 qui sera donc noté 4+6.

Chaque utilisateur possède une carte à puce en tant que support de données 5 contenant son numéro d'identification, la clé privée d'utilisateur 'u' destinée au cryptage des communications avec le serveur S de gestion des authentifications décrit dans la figure 1 ainsi que l'adresse IP(Protocole Internet) et la clé publique du dit serveur S. Chaque carte à puce contient aussi une ou plusieurs clés personnelles de cryptage et une liste de ports de communication autorisés. Le module de cryptage 7 repose sur un algorithme par bloc. L'interface d'entrée/sortie 8 est une interface permettant de se connecter à un bus PCI, l'autre interface 9 permet de se connecter au réseau Ethernet 12.

Dans cet exemple, chaque carte électronique 10 est personnalisée par la clé privée de cryptage contenue dans la mémoire 3, ainsi à l'aide d'un algorithme de cryptage asymétrique, les communications entre les éléments du réseau équipés du dispositif selon l'invention sont cryptées de façon unique pour chaque couple d'éléments du réseau possédant le dispositif selon l'invention. On utilisera dans cet exemple un algorithme d'échange de clés asymétrique décrit dans les brevets US et canadiens précités.

Comme microprocesseur 1, on peut utiliser un microprocesseur gérant directement le bus PCI (donc incluant l'interface d'entrée/sortie 8) et l'interface Ethernet (donc incluant l'interface d'entrée/sortie 9). La société Motorola en fabrique plusieurs à ce jour (par exemple ref : MPC860T). Ce microprocesseur est relié directement au module de cryptage 7 qui est une puce DES (Standard d'Encryptage des Données décrit dans la norme américaine NBS FIBS PUB 46 du 15 janvier 1977 ) fabriqué par la société NewBridge sous la référence CA95C68.

Le lecteur de carte à puce est par exemple un lecteur fabriqué par la société Gemplus sous la référence GCR 500-MS.

On va maintenant simuler le fonctionnement du dispositif.

Un utilisateur U introduit sa carte à puce personnelle dans le lecteur de l'ordinateur A. Il tape sur le clavier du lecteur de carte à puce son code confidentiel ce qui rend lisible pour le dit lecteur les données contenues dans la carte à puce de l'utilisateur U. La carte à puce contient le numéro d'identification de l'utilisateur, la clé privée 'u' de l'utilisateur destinée au cryptage des communications avec le serveur S de gestion des authentifications ainsi que l'adresse IP et la clé publique du serveur S de gestion des authentifications. La carte électronique de l'ordinateur A envoie de manière cryptée au serveur S de gestion des authentifications le numéro d'identification de l'utilisateur U en utilisant la clé de cryptage (g^as [N]) qu'elle est seule à détenir avec le serveur S de gestion des authentifications ('s' indique la clé privée de cryptage du serveur). En effet, le serveur S de gestion des authentifications a accès à toutes les clés publiques, connaît donc g^a [N], et peut donc calculer g^as [N]. De son coté, A connaît sa clé privé 'a' et la clé publique g^s [N] du serveur S et peut donc calculer de son coté g^as [N]. Le message peut donc être crypté par A et décrypté par le serveur S. Le serveur S consulte alors sa table pour déterminer la liste d'adresses TCP/IP avec lesquelles l'utilisateur U peut communiquer et pour chaque adresse la clé publique de cryptage associée à cette adresse. De plus, il identifie l'adresse IP de l'ordinateur A à l'utilisateur U.

Le serveur de gestion des authentifications envoie alors au dispositif selon l'invention équipant l'ordinateur A la liste des adresses autorisées pour l'utilisateur U ainsi que leurs clés publiques et la liste des ports de communication autorisés pour cet utilisateur. Cet envoi a toujours lieu de manière cryptée mais cette fois ci en utilisant la clé g^su [N] (où 'u' représente la clé privée de l'utilisateur destinée au cryptage des communications avec le serveur S de gestion des authentifications). Le microprocesseur 1 de la carte électronique 10 placée dans l'ordinateur A stocke alors cette liste.

Pour ne pas altérer le fonctionnement du réseau, le microprocesseur 1 calcule les clés de cryptage g^ab [N] (où 'b' est la clé privée d'un autre élément B quelconque du réseau) lorsqu'il n'a rien d'autre à faire. Les clés calculées sont ensuite stockées par le microprocesseur 1. Ces clés seront effacées dès que l'utilisateur retirera sa carte à puce 5 du lecteur 4.

Lorsqu'un paquet d'informations arrive (du réseau ou de l'unité centrale de l'ordinateur), le processeur 1 doit désemmailloter le protocole TCP/IP pour connaître : le port de communication utilisé par le paquet, l'adresse du destinataire (si le paquet vient de l'unité centrale) ou de l'expéditeur (si le paquet vient du réseau). Cette adresse sera dénommée 'adresse du paquet' dans la suite du document. Ce désemmaillotage du paquet permet de détecter certains paquets invalides qui ne respectent plus tous les critères du protocole de communication TCP/IP. Les détails de l'emmaillotage TCP/IP sont expliqués dans le livre de Monsieur Guy Pujolle 'Les réseaux' aux pages 539 à 579.

Lorsque l'ordinateur A communique avec un autre élément du réseau par exemple l'ordinateur B, le microprocesseur 1 vérifie si le port utilisé par le paquet appartient à la liste des ports autorisés. Ensuite le microprocesseur 1 regarde l'adresse du paquet : si elle appartient aux adresses autorisées le paquet est traité, sinon le paquet est ignoré. Dans le premier cas, le microprocesseur cherche si la clé de cryptage (g^ab [N]) nécessaire à la communication entre A et B a d'ores et déjà été calculée. Si ce n'est pas le cas, le microprocesseur calcule la clé manquante. Une fois la clé de cryptage (g^ab [N]) connue le paquet est crypté s'il vient de l'unité centrale ou décrypté s'il vient du réseau puis le processeur reconstitue l'emmaillotage TCP/IP. Ainsi les communications sont bien personnalisées entre deux couples d'éléments du réseau équipés du dispositif selon l'invention.

En supposant que dans la liste des éléments du réseau avec lesquels l'utilisateur U de l'ordinateur A est habilité à communiquer figure l'adresse de l'ordinateur B, le microprocesseur 1 de la carte électronique 10 placée dans l'ordinateur A peut calculer la clé de cryptage (g^ab [N]) qui sera utilisée par la puce DES pour communiquer de manière cryptée avec l'autre ordinateur B. Il faut alors distinguer plusieurs cas de fonctionnement de l'ordinateur B :
a) Il y a un utilisateur U' sur l'ordinateur B. Cet utilisateur U' dispose également de certaines clés publiques dont celle de A. La communication se fait alors sans problème.
b) Il y a un utilisateur U' sur l'ordinateur B. Néanmoins cet utilisateur U' n'a pas accès à l'ordinateur A. L'utilisateur U de l'ordinateur A ne peut alors entrer en communication avec l'ordinateur B car il risquerait d'affecter la sécurité du système.
c) Il n'y a aucun utilisateur sur l'ordinateur B. Le dispositif selon l'invention connecté à l'ordinateur B demande au serveur de gestion des authentifications S si l'utilisateur U est autorisé à avoir accès à l'ordinateur B alors que personne ne le surveille. Si le dispositif selon l'invention associé à l'ordinateur B obtient cet accord le serveur S de gestion des authentifications lui renvoie uniquement la clé publique du dispositif selon l'invention connectée à l'ordinateur A.
d) L'ordinateur B était sans utilisateur mais l'utilisateur U avait obtenu l'autorisation du serveur de gestion des authentifications de communiquer avec B. L'arrivée d'un utilisateur U' sur l'ordinateur B conduit aux alternatives a) ou b).
e) L'ordinateur B était utilisé par un utilisateur U' qui arrête d'utiliser l'invention en retirant sa carte à puce. Cette modification conduit à l'alternative c).

En supposant maintenant que l'utilisateur de l'ordinateur A désire crypter des données de façon personnelle sur son ordinateur, il envoie les données à crypter au microprocesseur 1 à l'aide d'un logiciel ne faisant pas partie de l'invention. Ces données sont alors cryptées à l'aide de la puce DES du module de cryptage 7 et de l'une des clés personnelles de cryptage contenue sur la carte à puce de l'utilisateur (la clé de cryptage est choisie par le logiciel). Le décryptage fonctionne de la même façon.

Dans le cas où le dispositif selon l'invention n'est pas personnalisé par une clé privée de cryptage, cette clé étant alors mémorisée sur chaque support de données 5, il faut que le microprocesseur 1 lise cette clé du support de données 5 avant de calculer les clés de cryptage.

Dans le cas où les communications entre chaque couple d'éléments du réseau équipés du dispositif selon l'invention ne sont pas personnalisées, le microprocesseur 1 n'a pas à calculer les clés de cryptage nécessaires au cryptage des communications car elles sont alors contenues sur chaque support de données 5: dans la liste des clés privées de cryptage.

Il est à noter qu'un utilisateur peut posséder plusieurs cartes à puce, dont une n'ayant aucune liste d'élément du réseau mais contenant uniquement des clés personnelles de cryptage. Ainsi l'utilisateur peut crypter ou décrypter des données et travailler sur ces données sans être connecté au réseau.

En possédant plusieurs cartes à puce, l'utilisateur peut donc accéder à différents niveaux de sécurité, à différents groupes d'ordinateurs. Les paramètres de sécurité transmis par le serveur dépendent, bien sûr, du niveau de sécurité demandé.

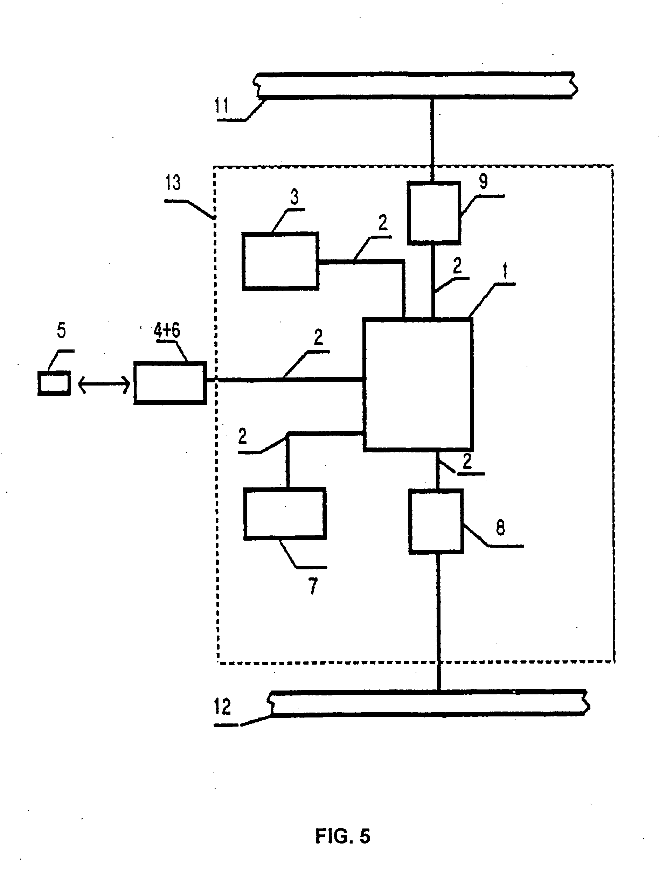

Dans un autre mode de réalisation de l'invention représenté sur la figure 5, où chaque dispositif selon l'invention n'est pas placé dans un ordinateur mais placé en tant que module indépendant sur le réseau, on peut envisager que le dispositif selon l'invention ne soit alors pas personnalisé par une clé privée de cryptage contenue dans la mémoire 3 mais par une clé privée de cryptage contenue dans le support de données 5 propre à chaque utilisateur ; cette clé est lue dès que l'utilisateur s'est authentifié auprès du module d'authentification. Dans ce mode de réalisation représenté sur la figure 5, le dispositif selon l'invention est constitué par une carte électronique 13 portant le microprocesseur 1 relié par plusieurs bus 2 à : la mémoire 3, le module de cryptage 7, les deux interfaces entrée/sortie 8 et 9 qui sont dans ce mode de réalisation des interfaces réseau faisant par exemple l'emmaillotage Ethernet dans le cas d'un réseau Ethernet. Le lecteur de données 4 peut encore être couplé au module d'authentification 6 sous la forme d'un lecteur de carte à puce qui peut être placé sur la carte électronique 13 ou, selon un autre mode de réalisation, qui peut être externe au module sus décrit.

Les composants utilisés dans ce mode de réalisation peuvent être ceux utilisés dans le premier mode de réalisation.

Le fonctionnement du module est identique au fonctionnement du dispositif selon l'invention comme il a été décrit dans le premier mode de réalisation sauf en ce qui concerne la clé privée de cryptage. Cette clé doit être lue dès que l'utilisateur s'est identifié à l'aide du module d'identification 6 pour pouvoir calculer les clés de cryptage (g^ab [N]).

Il est à noter que le lecteur de carte à puce peut être remplacé par un lecteur des empreintes digitales ou par un lecteur de la rétine de l'utilisateur. L'adresse du serveur S de gestion des authentifications est alors contenue dans la mémoire 3 ainsi que sa clé publique de cryptage. Lorsque l'utilisateur s'authentifie à l'aide du module d'authentification 6, ce module 6 possède alors des informations numériques sur l'utilisateur qu'il envoie au microprocesseur 1. Ce dernier utilise alors une partie de ces informations (par exemple les 128 premiers bits) pour former la clé privée 'u' de l'utilisateur destinée au cryptage des communications avec le serveur S de gestion des authentifications.

Tout se passe ensuite comme dans le cas du lecteur de carte à puce hormis le fait que l'utilisateur doit signaler qu'il arrête d'utiliser le dispositif selon l'invention, par exemple en appuyant sur un bouton.

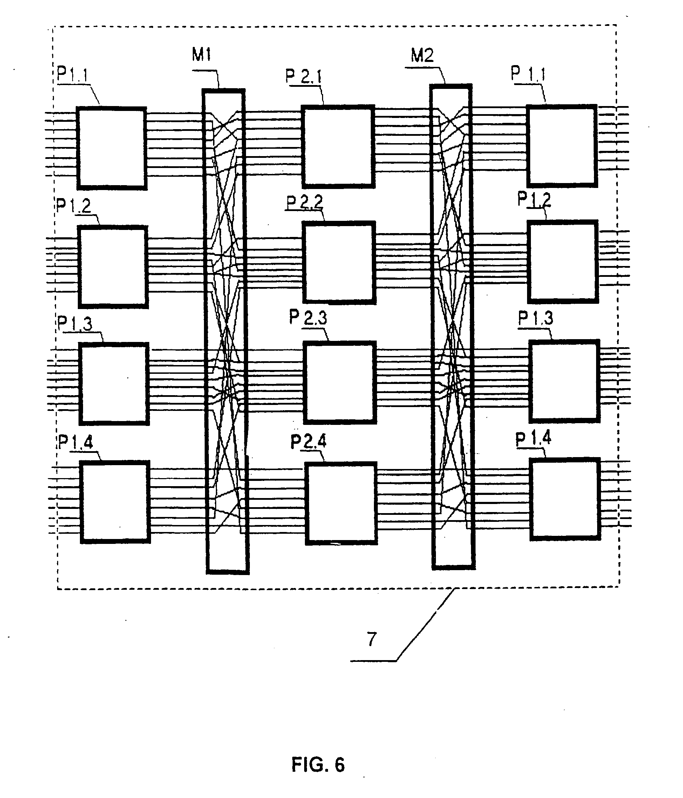

La figure 6 représente plus en détail un mode de réalisation du module de cryptage 7 faisant partie du dispositif selon l'invention. On introduit alors 12 puces DES rangées par colonnes de quatre; ces puces sont référencées par la notation Pi,j où i est l'indice de colonne et j celui de la ligne. On a également ajouté deux mélangeurs M1 et M2.

Ce module de cryptage fonctionne avec n'importe quel algorithme de cryptage par blocs, ce dernier pouvant être réalisé par logiciel ou par un dispositif matériel spécifique. Pour simplifier le texte et pour marquer l'analogie avec les algorithmes de type triple DES détaillés plus loin, on travaillera sur un exemple reposant sur l'utilisation d'une puce DES.

L'algorithme DES fonctionne avec une clé de 56 bits sur des messages découpés en paquets de 64 bits. Le triple DES est un algorithme de cryptographie reposant sur l'utilisation de trois DES successifs et pouvant être mis en oeuvre en utilisant trois puces DES. Un paquet à crypter traverse la première puce et est crypté avec une première clé de cryptage, il traverse ensuite la deuxième puce DES et est crypté avec une seconde clé, mais en utilisant ici l'algorithme inverse du DES. Il traverse ensuite la troisième puce DES où il est de nouveau crypté avec la première clé.

Il existe dans le commerce des mélangeurs permettant de 'mélanger' un message : 'n' bits en entrée sont mélangés par le mélangeur qui fournit 'n' bits en sortie mais dans un ordre différent. Cet ordre peut être à chaque fois redéfini par un nombre. Cette fonction de mélange peut se ramener à une consultation de table et peut être réalisée par un logiciel dans le microprocesseur 1 contenu dans l'invention ou par un composant programmable.

En couplant plusieurs puces DES avec un tel composant, on peut créer un DES travaillant sur des paquets beaucoup plus grands. Par exemple, soit 12 puces DES placées en rangées par 4. Les 4 premières sont placées en parallèle et traitent un message de 4 fois 64 bits (les puces fonctionnent simultanément avec les clés de cryptage K1,1 K1,2 K1,3 K1,4 respectivement pour la puce P1,1, P1,2, P1,3 et P1,4). Le message traverse ensuite un mélangeur M1 (contrôlé par la clé X). Le message traverse alors une nouvelle rangée de 4 puces DES P2,1 P2,2 P2,3 P2,4 en parallèle (contrôlées par les clés K2,1 K2,2 K2,3 K2,4). Dans cette deuxième rangée de puces, l'algorithme utilisé est l'inverse de celui utilisé dans les première et troisième rangées (à l'instar du triple DES). Puis, le message passe par un autre mélangeur (contrôlé par la clé X^-1 de manière à faire un mélange inverse). Enfin, une dernière rangée de 4 puces DES P3,1 P3,2 P3,3 P3,4 (contrôlées par les clés K3,1 K3,2 K3,3 K3,4) traite le message.

Ce montage peut être réalisé en trois phases avec une seule puce DES et un seul mélangeur, à condition de stocker les résultats intermédiaires. Pour cela, dans une première phase, le message de 4 fois 64 bits à traiter est découpé en quatre paquets de 64 bits. Le premier paquet traverse la puce contrôlée par la clé K1,1 et le résultat est stocké. Puis le deuxième paquet traverse la puce contrôlée cette fois par la clé K1,2 ; le résultat est stocké. De même, le troisième paquet est crypté par la clé K1,3 puis stocké. Enfin, le quatrième paquet est crypté par la clé K1,4 et stocké.

Chacun de ces 4 paquets cryptés à l'aide des clés K1,1 K1,2 K1,3 et K1,4 (de 64 bits) passe dans le mélangeur et est ensuite stocké puis est découpé en quatre nouveaux petits paquets de 16 bits. On réunit ensuite les premiers sous-paquets de 16 bits issus des paquets cryptés et mélangés de 64 bits ce qui forme un nouveau paquet de 64 bits lequel est à son tour mélangé.

On recommence une troisième fois ce qui a été décrit dans les paragraphes ci-dessus tout en remplaçant les clés de cryptage K2,1 K2,2 K2,3 et K2,4 par les clés K3,1 K3,2 K3,3 et K3,4. Bien entendu dans ce troisième passage, les informations ne passent pas forcément par un mélangeur. On peut créer une version de très haute sécurité avec 12 clés différentes pour les DES et deux autres clés pour les mélangeurs. La clé totale pourra avoir par exemple 1024 bits de façon à conserver une puissance de 2 (56 fois 12 soit 672 bits pour les DES, les clés des mélangeurs pouvant être beaucoup plus longues).

On peut conserver la symétrie du triple DES, en utilisant des clés identiques dans les premières et troisièmes phases à savoir K3,1=K1,1 , K3,2=K1,2 , K3,3=K1,3 et K3,4=K1,4 (la clé totale aura alors une taille de 512 bits) ou bien réaliser une version destinée au grand public, plus simple, ou K1,1=K1,2=K1,3=K1,4 et K2,1=K2,2=K2,3=K2,4. La clé sera alors de 128 ou 256 bits.

Sur le même principe, on peut travailler sur de grands blocs regroupant un nombre arbitraire de blocs élémentaires sur lesquels on fera agir un DES ou tout autre algorithme de cryptage par blocs.

Dans un troisième mode préféré de réalisation où chaque dispositif selon l'invention peut être placé soit dans un ordinateur soit dans un module indépendant, le dispositif est alors miniaturisé dans une puce.

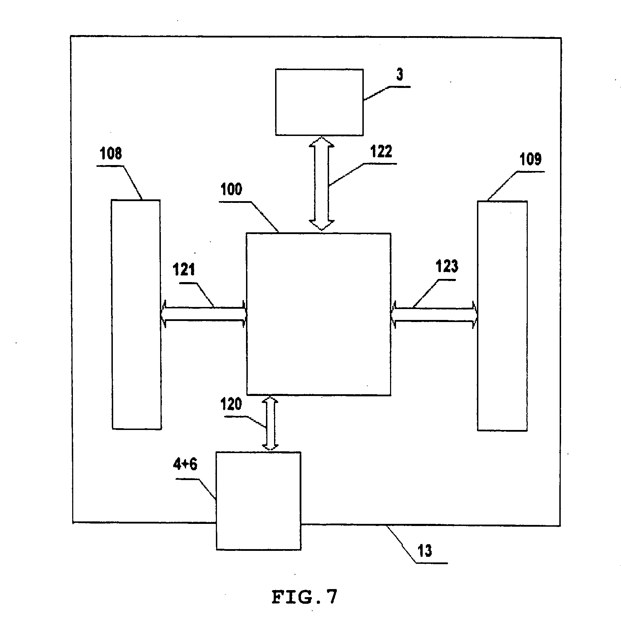

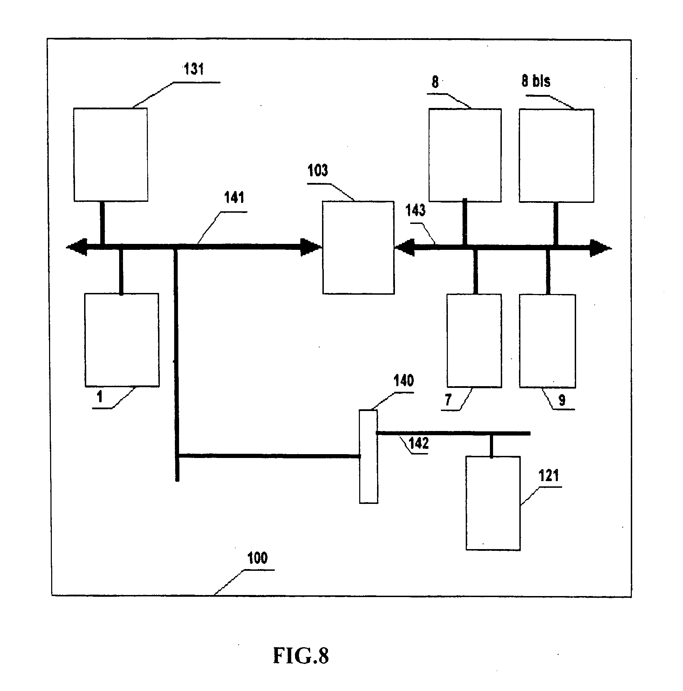

Le troisième mode préféré de réalisation est décrit dans les figures 7 et 8.

Le dispositif selon l'invention est alors constitué d'une carte électronique 13 portant une puce 100 reliée par plusieurs bus 120, 121, 122 et 123 à :
- une mémoire 3,
- deux connecteurs physiques 108 et 109 qui sont dans ce mode préféré de réalisation, deux connecteurs réseau (ARJ45 par exemple) ou un connecteur réseau et un connecteur à un bus interne de l'ordinateur (bus PCI par exemple),
- un lecteur de données 4 peut encore être couplé au module d'authentification 7 sous la forme d'un lecteur de carte à puce qui peut être placé sur la carte électronique ou, selon un autre mode de réalisation, qui peut être externe au module sus décrit.

Les composants (3, 4 et 6) utilisés dans ce mode préféré de réalisation peuvent être ceux utilisés dans le premier mode de réalisation.

Le bus 120 est un bus série (RS232), les bus 121, 122 et 123 sont des bus à 32 bits.

Les connecteurs 108 et 109 sont des connecteurs classiques que l'on trouve par exemple sur des cartes réseau PCI/Ethernet.

La puce 100 est décrite sur la figure 7. Ce type de puce est usuellement appelé « système on a chip » (système dans une puce) par les informaticiens.

La puce est alors constituée d'un coeur de processeur 1 (par un exemple un ARM7 de la société ARM) relié par un bus 32 bit 141 à :
- un contrôleur de mémoire 131 qui gère la mémoire externe 3
- un pont 140, permettant de relier plusieurs bus entre eux
- un bloc de mémoire double accès 103 interne à la puce.

le bus 143 est relié à la mémoire 103. Ainsi, les deux bus peuvent lire et écrire dans la mémoire 103. Le bus 143 est relié à 3 interfaces d'entrée/sortie 8, 8 bis et 9. Les interfaces 8 et 8bis sont des interfaces réseau (par exemple Ethernet) gérant toute les couches liaison et physique de la norme OSI (encapsulation, transport...) . Lors de l'implémentation de la puce 100 sur la carte 13, on choisit quelles interfaces d'entrée/sortie vont être utilisées (par exemple réseau/réseau, pour un mode de réalisation externe ou réseau/bus pour un mode de réalisation interne à l'ordinateur).

Ainsi ce mode de réalisation permet de créer une unique puce 100 permettant de réaliser ensuite très simplement un dispositif interne ou externe.

Le bus 142 est relié à une interface série (RS232) permettant de contrôler le lecteur de carte à puce 4. Il est possible de rajouter d'autres interfaces RS232 sur ce bus, par exemple, pour connecter la puce 100 à un V-modem ou tout simplement pour gérer des diodes placées sur la carte 13.

Le fonctionnement du module est identique au fonctionnement de l'invention comme il a été décrit dans le premier ou dans le second mode préféré de réalisation : Tout dépend de la clé privée de cryptage qui peut être placée dans la puce 100 (comme dans le premier mode de réalisation) ou fournie par l'utilisateur (comme dans le second mode de réalisation).

Il est bien entendu que les différents modes de réalisation décrits ci dessus sont purement illustratifs et non limitatifs et que de nombreuses modifications peuvent y être apportées sans pour autant sortir du cadre de l'invention.

Il est à noter que le lecteur de carte à puce peut être remplacé par un lecteur des empreintes digitales ou par un lecteur de la rétine de l'utilisateur.

## Revendications

1. Procédé permettant de sécuriser de manière répartie et dynamique un réseau de communication du type Internet **caractérisé en ce qu'**il comprend les étapes suivantes :
- l'étape d'interconnecter un dispositif (D) entre chaque équipement informatique devant être sécurisé et le réseau de communication,
- l'étape d'intercepter les communications entre un équipement informatique (A) muni du dispositif (D) et le réseau de communication au moyen dudit dispositif auquel cet équipement est connecté,
- l'étape d'obtenir des informations concernant un utilisateur (U) de l'équipement informatique (A) au moyen d'un module d'authentification (6) associé au dispositif (D),
- l'étape de définir un niveau de sécurité du dispositif (D) au moyen du module d'authentification (6) associé au dispositif (D),
- l'étape de transmettre les informations concernant l'utilisateur (U) et le niveau de sécurité du dispositif (D) à un serveur (S) de gestion des authentifications connecté au réseau,
- l'étape de traiter au moyen du serveur (S) lesdites informations concernant l'utilisateur et ledit niveau de sécurité du dispositif et d'authentifier l'utilisateur à l'aide desdites informations,
- l'étape de gérer les authentifications et les niveaux de sécurité au moyen du serveur (S) de gestion des authentifications,
- l'étape de transmettre du serveur vers les dispositifs du réseau des paramètres de sécurité, l'étape de mémoriser au moyen des dispositifs lesdits paramètres de sécurité provenant du serveur (S),
- l'étape de traiter au moyen des dispositifs lesdits paramètres de sécurité provenant du serveur (S).

2. Procédé selon la revendication 1, **caractérisé en ce que** les paramètres de sécurité comprennent en outre :
- une liste d'applications informatiques client/serveur autorisées,
- des informations permettant aux dispositifs d'analyser les messages concernant lesdites applications client/serveur.

3. Procédé selon la revendication 2, **caractérisé en ce qu'**il comprend en outre les étapes suivantes :
- l'étape d'analyser au moyen du dispositif (D) les messages concernant lesdites applications client/serveur,
- l'étape de filtrer au moyen du dispositif (D) les messages concernant lesdites applications client/serveur,
- l'étape de modifier au moyen du dispositif (D) les messages concernant lesdites applications client/serveur.

4. Procédé selon la revendication 1, **caractérisé en ce que** les paramètres de sécurité comprennent en outre :
- une liste d'équipements informatiques avec lesquels l'utilisateur (U) est habilité à communiquer.

5. Procédé selon la revendication 4, **caractérisé en ce qu'**il comprend en outre les étapes suivantes :
- l'étape de laisser transmettre par le dispositif (D) des messages entre l'équipement informatique (A) et les équipements informatiques avec lesquels l'utilisateur (U) est habilité à communiquer,
- l'étape de bloquer par le dispositif (D) des messages entre l'équipement informatique (A) et les équipements informatiques avec lesquels l'utilisateur (U) n'est pas habilité à communiquer.

6. Procédé selon la revendication 1, **caractérisé en ce qu'**il comprend en outre les étapes suivantes :
- l'étape de personnaliser le dispositif (D) à l'aide d'une clé privée de chiffrement fournie au moyen du module d'authentification (6),
- l'étape de mémoriser au moyen du serveur (S) toutes les clés publiques de chiffrement associées aux clés privées de chiffrement qui personnalisent les dispositifs.

7. Procédé selon la revendication 6, **caractérisé en ce que** les paramètres de sécurité comprennent en outre :
- une liste d'équipements informatiques avec lesquels l'utilisateur (U) est habilité à communiquer de manière chiffrée,
- la clé publique de chiffrement de chaque équipement informatique avec lequel l'utilisateur (U) est habilité à communiquer de manière chiffrée.

8. Procédé selon la revendication 7, **caractérisé en ce qu'**il comprend en outre l'étape suivante :
- l'étape de chiffrer au moyen du dispositif (D) les communications par combinaison de la clé privée de chiffrement dudit dispositif (D) avec la clé publique de chiffrement de l'équipement informatique avec lequel l'utilisateur (U) est habilité à communiquer de manière chiffrée.

9. Système permettant de sécuriser de manière répartie et dynamique un réseau de communication du type Internet **caractérisé en ce qu'**il comprend :
- un dispositif (D) interconnecté entre chaque équipement informatique devant être sécurisé et le réseau de communication,
- ledit dispositif comportant deux interfaces d'entrée/sortie pour intercepter les communications entre un équipement informatique (A) auquel il est connecté et le réseau de communication,
- ledit dispositif comportant en outre un module d'authentification (6) pour obtenir des informations concernant un utilisateur (U) de l'équipement informatique (A) et pour définir un niveau de sécurité dudit dispositif,
- ledit dispositif comportant des moyens pour transmettre les informations concernant l'utilisateur (U) et le niveau de sécurité du dispositif à un serveur de gestion des authentifications connecté au réseau,
- ledit serveur (S) de gestion des authentifications connecté au réseau comportant des moyens de traitement pour traiter lesdites informations et ledit niveau de sécurité et authentifier l'utilisateur à l'aide desdites informations,
- ledit serveur (S) comportant des moyens de gestion pour gérer les authentifications et les niveaux de sécurité desdits dispositifs,
- ledit serveur (S) comportant des moyens pour transmettre de manière répartie aux dispositifs du réseau des paramètres de sécurité,
- lesdits dispositifs (D) comportant des moyens de mémorisation pour mémoriser lesdits paramètres de sécurité,
- lesdits dispositifs (D) comportant des moyens de traitement pour traiter lesdits paramètres de sécurité pour établir une écluse, ou firewall, obtenant ainsi une sécurité répartie et dynamique du réseau de communication, cette sécurité étant configurable et évolutive, afin de s'adapter aux nouveaux besoins ou aux nouveaux modes d'attaque.

10. Système selon la revendication 9, **caractérisé en ce que** les paramètres de sécurité comprennent :
- une liste d'applications informatiques client/serveur autorisées,
- des informations permettant aux dispositifs d'analyser les messages concernant lesdites applications client/serveur.

11. Système selon la revendication 10, **caractérisé en ce que** les moyens de traitement du dispositif comprennent :
- des moyens pour analyser les messages concernant lesdites applications client/serveur,
- des moyens pour filtrer les messages concernant lesdites applications client/serveur,
- des moyens pour modifier les messages concernant lesdites applications client/serveur.

12. Système selon la revendication 9, **caractérisé en ce que** les paramètres de sécurité comprennent en outre :
- une liste d'équipements informatiques avec lesquels l'utilisateur (U) est habilité à communiquer.

13. Système selon la revendication 12, **caractérisé en ce que** lesdits moyens de traitement du dispositif comprennent en outre :
- des moyens pour laisser transmettre des messages entre l'équipement informatique (A) et les équipements informatiques avec lesquels l'utilisateur (U) est habilité à communiquer,
- des moyens pour bloquer des messages entre l'équipement informatique (A) et les équipements informatiques avec lesquels l'utilisateur (U) n'est pas habilité à communiquer.

14. Système selon la revendication 9, **caractérisé en ce que :**
- le module d'authentification associé au dispositif personnalisé au moyen d'une clé privée de chiffrement qui personnalise le dispositif auquel il est associé,
- le serveur (S) mémorise toutes les clés publiques de chiffrement associées aux clés privées de chiffrement qui personnalisent les dispositifs.

15. Système selon la revendication 14, **caractérisé en ce que** les paramètres de sécurité comprennent en outre :
- une liste des équipements informatiques avec lesquels l'utilisateur (U) est habilité à communiquer de manière chiffrée,
- la clé publique de chiffrement de chaque équipement informatique avec lequel l'utilisateur (U) est habilité à communiquer de manière chiffrée.

16. Système selon la revendication 15, **caractérisé en ce que** les dispositifs comprennent en outre :
- un module de chiffrement pour chiffrer les communications par combinaison de la clé privée de chiffrement du dispositif (D) avec la clé publique de chiffrement de l'équipement informatique avec lequel l'utilisateur (U) est habilité à communiquer de manière chiffrée.

17. Serveur permettant de sécuriser de manière répartie et dynamique un réseau de communication du type Internet **caractérisé en ce qu'**il comprend :
- des moyens de traitement pour traiter des informations et des niveaux de sécurités provenant de dispositifs (D), chaque information et niveau de sécurité concernant un utilisateur (U) d'un équipement informatique (A) auquel est connecté un dispositif (D),
- lesdits moyens de traitement permettent d'authentifier l'utilisateur (U) à l'aide desdites informations et desdits niveaux de sécurité,
- des moyens de gestion pour gérer les authentifications,
- des moyens de transmission pour transmettre aux dispositifs du réseau des paramètres de sécurité pour établir une écluse, ou firewall, le serveur configurant ainsi de manière dynamique et repartie la sécurité du réseau, afin de s'adapter aux nouveaux besoins ou aux nouveaux modes d'attaque.

18. Serveur selon la revendication 17, **caractérisé en ce que** les paramètres de sécurité comprennent :
- une liste d'applications informatiques client/serveur autorisées,
- des informations permettant aux dispositifs d'analyser les messages concernant lesdites applications client/serveur.

19. Serveur selon la revendication 17, **caractérisé en ce que** les paramètres de sécurité comprennent en outre :
- une liste d'équipements informatiques avec lesquels l'utilisateur (U) est habilité à communiquer.

20. Serveur selon la revendication 17, **caractérisé en ce qu'**il comprend :
- des moyens de mémorisation pour mémoriser toutes les clés publiques de chiffrement associées aux clés privées de chiffrement qui personnalisent les dispositifs.

21. Serveur selon la revendication 20, **caractérisé en ce que** les paramètres de sécurité comprennent en outre :
- une liste des équipements informatiques avec lesquels l'utilisateur (U) est habilité à communiquer de manière chiffrée,
- la clé publique de chiffrement de chaque équipement informatique avec lequel l'utilisateur (U) est habilité à communiquer de manière chiffrée.

22. Dispositif de sécurisation d'un réseau de communication, interconnecté entre chaque équipement informatique devant être sécurisé et ledit réseau et
**caractérisé en ce qu'**il comprend :
- deux interfaces d'entrée/sortie pour intercepter les communications entre un équipement informatique (A) auquel il est connecté et le réseau de communication,
- un module d'authentification (6) pour obtenir des informations concernant un utilisateur (U) de l'équipement informatique (A) et pour définir le niveau de sécurité dudit dispositif,
- des moyens pour transmettre les informations concernant l'utilisateur (U) et le niveau de sécurité du dispositif vers un serveur (S) de gestion des authentifications,
- des moyens de mémorisation pour mémoriser des paramètres de sécurité provenant du serveur (S),
- des moyens de traitement pour traiter lesdits paramètres de sécurité provenant du serveur (S) pour établir une écluse, ou firewall, obtenant ainsi une sécurité répartie et dynamique du réseau de communication, cette sécurité étant configurable et évolutive, afin de s'adapter aux nouveaux besoins ou aux nouveaux modes d'attaque.

23. Dispositif selon la revendication 22, **caractérisé en ce que** les paramètres de sécurité comprennent :
- une liste d'applications informatiques client/serveur autorisées,
- des informations permettant aux dispositifs d'analyser les messages concernant lesdites applications client/serveur.

24. Dispositif selon la revendication 23, **caractérisé en ce que** lesdits moyens de traitement du dispositif comprennent :
- des moyens pour analyser les messages concernant lesdites applications client/serveur,
- des moyens pour filtrer les messages concernant lesdites applications client/serveur,
- des moyens pour modifier les messages concernant lesdites applications client/serveur.

25. Dispositif selon la revendication 22, **caractérisé en ce que** les paramètres de sécurité comprennent en outre :
- une liste d'équipements informatiques avec lesquels l'utilisateur (U) est habilité à communiquer.

26. Dispositif selon la revendication 25, **caractérisé en ce que** lesdits moyens de traitement du dispositif comprennent :
- des moyens pour laisser transmettre des messages entre l'équipement informatique (A) et les équipements informatiques avec lesquels l'utilisateur (U) est habilité à communiquer,
- des moyens pour bloquer des messages entre l'équipement informatique (A) et les équipements informatiques avec lesquels l'utilisateur (U) n'est pas habilité à communiquer.

27. Dispositif selon la revendication 22, **caractérisé en ce que** le module d'authentification associé audit dispositif fournit en outre :
- une clé privée de chiffrement qui personnalise ledit dispositif (D).

28. Dispositif selon la revendication 27, **caractérisé en ce que** les paramètres de sécurité comprennent en outre :
- une liste des équipements informatiques avec lesquels l'utilisateur (U) est habilité à communiquer de manière chiffrée,
- la clé publique de chiffrement de chaque équipement informatique avec lequel l'utilisateur (U) est habilité à communiquer de manière chiffrée.

29. Dispositif selon la revendication 28, **caractérisé en ce qu'**il comprend en outre :
- un module de chiffrement pour chiffrer les communications par combinaison de la clé privée de chiffrement dudit dispositif (D) avec la clé publique de chiffrement de l'équipement informatique avec lequel l'utilisateur (U) est habilité à communiquer de manière chiffrée.

## Claims

1. Method for distributively and dynamically securing a communications network of the Internet type, **characterized in that** it comprises the steps of :
- the step of interconnecting a device (D) between each computer equipment to be secured and the network,
- the step of intercepting communications between a computer equipment (A) having the device (D) and the network by means of said device to which this equipment is connected,
- the step of obtaining information related to a user (U) of said computer equipment (A) by an authentication module (6) associated with said device (D),
- the step of defining a security level of the device (D) by said authentication module (6) associated with said device (D),
- the step of transmitting information related to the user (U) and the security level of the device (D) to an authentication management server (S) connected to the network,
- the step of processing by means of the server (S) said information related to the user and said security level of the device and authenticating the user by said information,
- the step of managing the authentications and the security levels by means of the authentication management server (S),
- the step of transmitting, from the server to the network devices, security parameters, the step of memorizing by means of the devices said security parameters coming from the server,
- the step of processing said security parameters coming from the server (S) by means of the devices.

2. Method according to claim 1, **characterized in that** the security parameters further comprise :
- a list of authorized computer client/server applications,
- information enabling the devices to analyse messages related to said client/server applications.

3. Method according to claim 2, **characterized in that** it further comprises the following steps :
- the step of analyzing messages related to said client/server applications by the device (D),
- the step of filtering messages related to said client/server applications by the device (D),
- the step of modifying messages related to said client/server applications by the device (D).

4. Method according to claim 1, **characterized in that** the security parameters further comprise :
- a list of computer equipment which the user (U) is authorized to communicate with.

5. Method according to claim 4, **characterized in that** it further comprises the following steps :
- the step of enabling the device (D) to transmit messages between the computer equipment (A) and the computer equipment which the user (U) is authorized to communicate with,
- the step of blocking said device (D) from transmitting messages between the computer equipment (A) and the computer equipments which the user (U) is not authorized to communicate with.

6. Method according to claim 1, **characterized in that** it further comprises the following steps :
- the step of customizing the device (D) with encipherment private keys provided by said authentication module (6),
- the step of memorizing by the server (S) all the encipherment public keys associated to encipherment private keys which customize the devices.

7. Method according to claim 6, **characterized in that** the security parameters further comprise :
- a list of computer equipment which the user (U) is authorized to communicate with, in an enciphered manner,
- the encipherment public key of each computer equipment which the user (U) is authorized to communicate with, in an enciphered manner.

8. Method according to claim 7, **characterized in that** it further comprises the following step :
- the step of enciphering by the device (D) communications by combining the encipherment private key of said device (D) with the encipherment public key of the computer equipment which the user (U) is authorized to communicate with, in an enciphered manner.

9. System for distributively and dynamically securing a communication network of the Internet type, **characterized in that** it comprises :
- a device (D) interconnected between each computer equipment to be secured and the communication network,
- said device comprising two input/output interfaces for intercepting communications between a computer equipment (A) connected to said device and the communication network,
- said device further comprising an authentication module (6) for obtaining information related to a user (U) of the computer equipment (A) and for defining a security level of said device,
- said device comprising means for transmitting information related to the user (U) and the security level of the device to an authentication management server connected to the network,
- said authentication management server (S) connected to the network comprising means for processing said information and said security level and for authenticating the user with said information,
- said server (S) comprising means for managing the authentications and the security levels of said devices,
- said server (S) comprising means for distributively transmitting the security parameters to the devices of the network,
- said devices (D) comprising means for memorizing said security parameters,
- said devices (D) comprising means for processing said security parameters to establish a firewall, thereby distributively and dynamically obtaining a security of the communication network, that security is configurable and sealable to adapt to new needs and new modes of attack.

10. System according to claim 9, **characterized in that** the security parameters comprise :
- a list of authorized client/server computer applications,
- information enabling the devices to analyze messages related to said client/server applications.

11. System according to claim 10, **characterized in that** the processing means of the device comprise :
- means for analyzing messages related to said client/server applications,
- means for filtering messages related to said client/server applications,
- means for modifying messages related to said client/server applications.

12. System according to claim 9, **characterized in that** the security parameters further comprise :
- a list of computer equipments which the user (U) is authorized to communicate with.

13. System according to claim 12, **characterized in that** the processing means of the device comprise :
- means for enabling to transmit messages between the computer equipment (A) and the computer equipment which the user (U) is authorized to communicate with,
- means for blocking said messages between the computer equipment (A) and the computer equipment which the user (U) is not authorized to communicate with.

14. System according to claim 9, **characterized in that :**
- the authentication module associated with the device customized with a encipherment private key which customizes the device which it is associated with,
- the server (S) memorizes all the encipherment public keys associated with encipherment private keys which customize the devices.

15. System according to claim 14, **characterized in that** the security parameters further comprise :
- a list of computer equipment which the user (U) is authorized to communicate with, in an enciphered manner,
- the encipherment public key of each computer equipment which the user (U) is authorized to communicate with, in an enciphered manner.

16. System according to claim 15, **characterized in that** the devices further comprise :
- an encipherment module for enciphering communications by combining the encipherment private key of the device (D) with the encipherment public key of the computer equipment which the user (U) is authorized to communicate with, in an enciphered manner.

17. Server for distributively and dynamically securing a communications network of the Internet type, **characterized in that** it comprises :
- means for processing information and security levels from devices (D), each information and security level related to a user (U) of a computer equipment (A) which a device (D) is connected to,
- said processing means enabling to authenticate the user (U) with said information and said security levels,
- means for managing authentications,
- means for transmitting to the network devices security parameters to establish a firewall, the server thereby distributively and dynamically configuring the security of the network, to match to new needs or new modes of attack.

18. Server according to claim 17, **characterized in that** the security parameters comprise :
- a list of authorized client/server computer applications,
- information enabling the devices to analyze messages related to said client/server applications.

19. Server according to claim 17, **characterized in that** the security parameters further comprise :
- a list of computer equipments which the user (U) is authorized to communicate with.

20. Server according to claim 17, **characterized in that** it comprises :
- means for memorizing all the encipherment public keys associated to the encipherment private keys which customize the devices.

21. Server according to claim 20, **characterized in that** the security parameters further comprise :
- a list of computer equipments which the user (U) is authorized to communicate with, in an enciphered manner,
- the encipherment public key of each computer equipment which the user (U) is authorized to communicate with, in an enciphered manner.

22. Device for securing a communication network, interconnected between each computer equipment to be secured and said network, and **characterized in that** it comprises :
- two input/output interfaces for intercepting communications between a computer equipment (A) connected to said device and the communication network,
- an authentication module (6) for obtaining information related to a user (U) of the computer equipment (A) and for defining a security level of said device,
- means for transmitting information related to the user (U) and the security level of the device to an authentication management server,
- means for memorizing security parameters coming from the server (S),
- means for processing said security parameters from the server (S) to establish a firewall, thereby distributively and dynamically obtaining a security of the communication network, that security is configurable and sealable to adapt to new needs and new modes of attack.

23. Device according to claim 22, **characterized in that** the security parameters comprise :
- a list of authorized client/server computer applications,
- information enabling the devices to analyse messages related to said client/server applications.

24. Device according to claim 23, **characterized in that** said processing means of the device comprise :
- means for analyzing messages related to said client/server applications,
- means for filtering messages related to said client/server applications,
- means for modifying messages related to said client/server applications

25. Device according to claim 22, **characterized in that** the security parameters further comprise :
- a list of computer equipments which the user (U) is authorized to communicate with.

26. Device according to claim 25, **characterized in that** said processing means of the device comprise :
- means for enabling the device (D) to transmit messages between the computer equipment (A) and the computer equipment which the user (U) is authorized to communicate with,
- means for blocking said device from transmitting messages between the computer equipment (A) and the computer equipment which the user (U) is not authorized to communicate with.

27. Device according to claim 22, **characterized in that** the authentication module associated to said device further provides :
- a encipherment private key which customize said device (D).

28. Device according to claim 27, **characterized in that** the security parameters further comprise :
- a list of computer equipments which the user (U) is authorized to communicate with, in an enciphered manner.
- the encipherment public key of each computer equipment which the user (U) is authorized to communicate with, in an enciphered manner.

29. Device according to claim 28, **characterized in that** it further comprises :
- an encipherment module for enciphering communications by combining the encipherment private key of the device (D) with the encipherment public key of the computer equipment which the user (U) is authorized to communicate with, in an enciphered manner.

## Patentansprüche

1. Verfahren, das gestattet, auf verteilte und dynamische Weise ein Kommunikationsnetz vom Typ Internet zu sichern,
**dadurch gekennzeichnet, dass** es folgende Schritte umfasst:
- Schritt, um eine Vorrichtung D zwischen einer jeden Informatikeinrichtung, die gesichert werden soll und dem Kommunikationsnetz zusammen zu schalten,
- Schritt, um die Kommunikationen zwischen einer Informatikeinrichtung (A), die mit der Vorrichtung (D) versehen ist, und dem Kommunikationsnetz mittels der Vorrichtung, mit der diese Informatikeinrichtung verbunden ist, abzufangen,
- Schritt, um Informationen, die einen Benutzer (U) der Informatikeinrichtung (A) betreffen, mittels eines Authentifizierungsmoduls (6) zu erhalten, das mit der Vorrichtung (D) verbunden ist,
- Schritt, um ein Sicherheitsniveau der Vorrichtung (D) mittels des Authentifizierungsmoduls (6) festzulegen, das mit der Vorrichtung (D) verbunden ist,
- Schritt, um die Informationen, betreffend den Benutzer (U) und das Sicherheitsniveau der Vorrichtung (D) an einen Server (S) zur Verwaltung der Authentifizierungen zu übertragen, der mit dem Netz verbunden ist,
- Schritt, um mittels des Servers (S) die Informationen, betreffend den Benutzer und das Sicherheitsniveau der Vorrichtung zu verarbeiten und um den Benutzer mithilfe der Informationen zu authentifizieren,
- Schritt, um die Authentifizierungen und die Sicherheitsniveaus mittels des Servers (S) zur Verwaltung der Authentifizierungen zu verwalten,
- Schritt, um vom Server in Richtung auf die Vorrichtungen des Netzes Sicherheitsparameter zu übertragen, Schritt, um mittels der Vorrichtungen die Sicherheitsparameter, die vom Server (S) ausgehen, zu speichern,
- Schritt, um mittels der Vorrichtungen die Sicherheitsparameter, die vom Server (S) ausgehen, zu verarbeiten.

2. Verfahren nach Anspruch 1, **dadurch gekennzeichnet, dass** die Sicherheitsparameter außerdem Folgendes umfassen:
- eine Liste autorisierter Client-Server-Informatikanwendungen,
- Informationen, die den Vorrichtungen gestatten, die Meldungen, die die Client-Server-Anwendungen betreffen, zu analysieren.

3. Verfahren nach Anspruch 2, **dadurch gekennzeichnet, dass** es außerdem folgende Schritte umfasst:
- Schritt, um mittels der Vorrichtung (D) die Meldungen zu analysieren, die die Client-Server-Anwendungen betreffen,
- Schritt, um mittels der Vorrichtung (D) die Meldungen zu filtern, die die Client-Server-Anwendungen betreffen,
- Schritt, um mittels der Vorrichtung (D) die Meldungen zu modifizieren, die die Client-Server-Anwendungen betreffen.

4. Verfahren nach Anspruch 1, **dadurch gekennzeichnet, dass** die Sicherheitsparameter außerdem Folgendes umfassen:
- eine Liste von Informatikeinrichtungen, mit denen der Benutzer (U) berechtigt ist zu kommunizieren.

5. Verfahren nach Anspruch 4, **dadurch gekennzeichnet, dass** es außerdem folgende Schritte umfasst:
- Schritt, um durch die Vorrichtung (D) Meldungen zwischen der Informatikeinrichtung (A) und den Informatikeinrichtungen übertragen zu lassen, mit denen der Benutzer (U) berechtigt ist zu kommunizieren,
- Schritt, um durch die Vorrichtung (D) Meldungen zwischen der Informatikeinrichtung (A) und den Informatikeinrichtungen zu blocken, mit denen der Benutzer (U) nicht berechtigt ist zu kommunizieren.

6. Verfahren nach Anspruch 1,
**dadurch gekennzeichnet, dass** es außerdem folgende Schritte umfasst:
- Schritt, um die Vorrichtung (D) mithilfe eines persönlichen Codierungsschlüssels zu personalisieren, der mittels des Authentifizierungsmoduls (6) bereitgestellt wird,
- Schritt, um mittels des Servers (S) alle öffentlichen Codierungsschlüssel zu speichern, die mit den persönlichen Codierungsschlüsseln verbunden sind, die die Vorrichtungen personalisieren.

7. Verfahren nach Anspruch 6, **dadurch gekennzeichnet, dass** die Sicherheitsparameter außerdem Folgendes aufweisen:
- eine Liste von Informatikeinrichtungen, mit denen der Benutzer (U) berechtigt ist, auf codierte Weise zu kommunizieren,
- den öffentlichen Codierungsschlüssel für eine jede Informatikeinrichtung, mit der der Benutzer (U) berechtigt ist, auf codierte Weise zu kommunizieren.

8. Verfahren nach Anspruch 7, **dadurch gekennzeichnet, dass** es außerdem folgenden Schritt umfasst:
- Schritt, um mittels der Vorrichtung (D) die Kommunikationen durch Kombination des persönlichen Codierungsschlüssels der Vorrichtung (D) mit dem öffentlichen Codierungsschlüssel der Informatikeinrichtung zu codieren, mit der der Benutzer (U) berechtigt ist, auf codierte Weise zu kommunizieren.

9. System, das gestattet, auf verteilte und dynamische Weise ein Kommunikationsnetz vom Typ Internet zu sichern,
**dadurch gekennzeichnet, dass** es Folgendes umfasst:
- eine Vorrichtung (D), die zwischen einer jeden Informatikeinrichtung, die gesichert werden soll, und dem Kommunikationsnetz zusammengeschaltet ist,
- die Vorrichtung, die zwei Eingang-Ausgang-Schnittstellen aufweist, um die Kommunikationen zwischen einer Informatikeinrichtung (A), mit der sie verbunden ist, und dem Kommunikationsnetz abzufangen,
- die Vorrichtung, die außerdem ein Authentifizierungsmodul (6) aufweist, um Informationen zu erhalten, die einen Benutzer (U) der Informatikeinrichtung (A) betreffen, und um ein Sicherheitsniveau der Vorrichtung festzulegen,
- die Vorrichtung, die Mittel aufweist, um die Informationen, betreffend den Benutzer (U) und das Sicherheitsniveau der Vorrichtung an einen Server zur Verwaltung der Authentifizierungen zu übertragen, der mit dem Netz verbunden ist,
- den Server (S) zur Verwaltung der Authentifizierungen, der mit dem Netz verbunden ist, Verarbeitungsmittel aufweisend, um die Informationen und das Sicherheitsniveau zu verarbeiten und um den Benutzer mithilfe der Informationen zu authentifizieren,
- den Server (S), der Verwaltungsmittel aufweist, um die Authentifizierungen und die Sicherheitsniveaus der Vorrichtungen zu verwalten,
- den Server (S), der Mittel aufweist, um auf verteilte Weise an die Vorrichtungen des Netzes Sicherheitsparameter zu übertragen,
- die Vorrichtungen (D), die Speichermittel aufweisen, um die Sicherheitsparameter zu speichern,
- die Vorrichtungen (D), die Verarbeitungsmittel aufweisen, um die Sicherheitsparameter zu verarbeiten, um eine Schleuse oder Firewall zu erstellen, wobei man somit eine verteilte und dynamische Sicherheit des Kommunikationsnetzes erhält, wobei diese Sicherheit konfigurierbar und evolutiv ist, um sich an die neuen Erfordernisse oder an die neuen Angriffsmodi anzupassen.

10. System nach Anspruch 9, **dadurch gekennzeichnet, dass** die Sicherheitsparameter Folgendes umfassen:
- eine Liste autorisierter Client-Server-Informatikanwendungen,
- Informationen, die den Vorrichtungen gestatten, die Meldungen zu analysieren, die die Client-Server-Anwendungen betreffen.

11. System nach Anspruch 10, **dadurch gekennzeichnet, dass** die Verarbeitungsmittel der Vorrichtung Folgendes umfassen:
- Mittel, um die Meldungen zu analysieren, die die Client-Server-Anwendungen betreffen,
- Mittel, um die Meldungen zu filtern, die die Client-Server-Anwendungen betreffen,
- Mittel, um die Meldungen zu modifizieren, die die Client-Server-Anwendungen betreffen.

12. System nach Anspruch 9, **dadurch gekennzeichnet, dass** die Sicherheitsparameter außerdem Folgendes umfassen:
- eine Liste von Informatikeinrichtungen, mit denen der Benutzer (U) berechtigt ist zu kommunizieren.

13. System nach Anspruch 12, **dadurch gekennzeichnet, dass** die Verarbeitungsmittel der Vorrichtung außerdem Folgendes umfassen:
- Mittel, um Meldungen zwischen der Informatikeinrichtung (A) und den Informatikeinrichtungen übertragen zu lassen, mit denen der Benutzer (U) berechtigt ist zu kommunizieren,
- Mittel, um Meldungen zwischen der Informatikeinrichtung (A) und den Informatikeinrichtungen zu blocken, mit denen der Benutzer (U) nicht berechtigt ist zu kommunizieren.

14. System nach Anspruch 9, **dadurch gekennzeichnet, dass:**
- das Authentifizierungsmodul, das mit der personalisierten Vorrichtung mittels eines persönlichen Codierungsschlüssels verbunden ist, der die Vorrichtung personalisiert, mit der es verbunden ist,
- der Server (S) sämtliche öffentliche Codierungsschlüssel speichert, die mit den persönlichen Codierungsschlüsseln verbunden sind, die die Vorrichtungen personalisieren.

15. System nach Anspruch 14, **dadurch gekennzeichnet, dass** die Sicherheitsparameter außerdem Folgendes umfassen:
- eine Liste der Informatikeinrichtungen, mit denen der Benutzer (U) berechtigt ist, auf codierte Weise zu kommunizieren,
- den öffentlichen Codierungsschlüssel für eine jede Informatikeinrichtung, mit der der Benutzer (U) berechtigt ist, auf codierte Weise zu kommunizieren.

16. System nach Anspruch 15, **dadurch gekennzeichnet, dass** die Vorrichtungen außerdem Folgendes aufweisen:
- ein Codierungsmodul, um die Kommunikationen durch Kombination des persönlichen Codierungsschlüssels der Vorrichtung (D) mit dem öffentlichen Codierungsschlüssel der Informatikeinrichtung zu codieren, mit der der Benutzer (U) berechtigt ist, auf codierte Weise zu kommunizieren.

17. Server, der gestattet, auf verteilte und dynamische Weise ein Kommunikationsnetz vom Typ Internet zu sichern,
**dadurch gekennzeichnet, dass** er Folgendes umfasst:
- Verarbeitungsmittel, um Informationen und Sicherheitsniveaus zu verarbeiten, die von Vorrichtungen (D) ausgehen, eine jede Information und ein jedes Sicherheitsniveau, die bzw. das einen Benutzer (U) einer Informatikeinrichtung (A) betrifft, mit der eine Vorrichtung (D) verbunden ist,
- die Verarbeitungsmittel, die gestatten, den Benutzer (U) mithilfe der Informationen und der Sicherheitsniveaus zu authentifizieren,
- Verwaltungsmittel, um die Authentifizierungen zu verwalten,
- Übertragungsmittel, um an die Vorrichtungen des Netzes Sicherheitsparameter zu übertragen, um eine Schleuse oder Firewall zu erstellen, wobei der Server somit auf dynamische und verteilte Weise die Sicherheit des Netzes konfiguriert, um sich an die neuen Erfordernisse oder an die neuen Angriffsmodi anzupassen.

18. Server nach Anspruch 17, **dadurch gekennzeichnet, dass** die Sicherheitsparameter Folgendes umfassen:
- eine Liste autorisierter Client-Server Informatikanwendungen,
- Informationen, die den Vorrichtungen gestatten, die Meldungen zu analysieren, die die Client-Server-Anwendungen betreffen.

19. Server nach Anspruch 17, **dadurch gekennzeichnet, dass** die Sicherheitsparameter außerdem Folgendes umfassen:
- eine Liste von Informatikeinrichtungen, mit denen der Benutzer (U) berechtigt ist, zu kommunizieren.

20. Server nach Anspruch 17, **dadurch gekennzeichnet, dass** er Folgendes umfasst:
- Speichermittel, um sämtliche öffentlichen Codierungsschlüssel, die mit den persönlichen Codierungsschlüsseln verbunden sind, zu speichern, die die Vorrichtungen personalisieren.

21. Server nach Anspruch 20, **dadurch gekennzeichnet, dass** die Sicherheitsparameter außerdem Folgendes umfassen:
- eine Liste der Informatikeinrichtungen, mit denen der Benutzer (U) berechtigt ist, auf codierte Weise zu kommunizieren,
- den öffentlichen Schlüssel zur Codierung einer jeden Informatikeinrichtung, mit der der Benutzer (U) berechtigt ist, auf codierte Weise zu kommunizieren.

22. Vorrichtung zur Sicherung eines Kommunikationsnetzes, die zwischen einer jeden Informatikeinrichtung, die gesichert werden soll, und dem Netz zusammengeschaltet und **dadurch gekennzeichnet ist, dass** sie Folgendes umfasst:
- zwei Eingang-Ausgang-Schnittstellen, um die Kommunikationen zwischen einer Informatikeinrichtung (A), mit der sie verbunden ist, und dem Kommunikationsnetz abzufangen,
- ein Authentifizierungsmodul (6), um Informationen zu erhalten, die einen Benutzer (U) der Informatikeinrichtung (A) betreffen und um das Sicherheitsniveau der Vorrichtung festzulegen,
- Mittel, um die Informationen, betreffend den Benutzer (U) und das Sicherheitsniveau der Vorrichtung in Richtung auf einen Server (S) zur Verwaltung der Authentifizierungen zu übertragen,
- Speichermittel, um Sicherheitsparameter, die vom Server (S) ausgehen, zu speichern,
- Verarbeitungsmittel, um die Sicherheitsparameter zu verarbeiten, die vom Server (S) ausgehen, um eine Schleuse oder Firewall zu erstellen, wobei man somit eine verteilte und dynamische Sicherheit des Kommunikationsnetzes erhält, wobei diese Sicherheit konfigurierbar und evolutiv ist, um sich an die neuen Erfordernisse oder an die neuen Angriffsmodi anzupassen.

23. Vorrichtung nach Anspruch 22, **dadurch gekennzeichnet, dass** die Sicherheitsparameter Folgendes umfassen:
- eine Liste autorisierter Client-Server-Informatikanwendungen,
- Informationen, die den Vorrichtungen gestatten, die Meldungen zu analysieren, die die Client-Server-Anwendungen betreffen.

24. Vorrichtung nach Anspruch 23, **dadurch gekennzeichnet, dass** die Verarbeitungsmittel der Vorrichtung Folgendes umfassen:
- Mittel, um die Meldungen zu analysieren, die die Client-Server-Anwendungen betreffen,
- Mittel, um die Meldungen zu filtern, die die Client-Server-Anwendungen betreffen,
- Mittel, um die Meldungen zu modifizieren, die die Client-Server-Anwendungen betreffen.

25. Vorrichtung nach Anspruch 22, **dadurch gekennzeichnet, dass** die Sicherheitsparameter außerdem Folgendes umfassen:
- eine Liste von Informatikeinrichtungen, mit denen der Benutzer (U) berechtigt ist zu kommunizieren.

26. Vorrichtung nach Anspruch 25, **dadurch gekennzeichnet, dass** die Verarbeitungsmittel der Vorrichtung Folgendes umfassen:
- Mittel, um Meldungen zwischen der Informatikeinrichtung (A) und den Informatikeinrichtungen übertragen zu lassen, mit denen der Benutzer (U) berechtigt ist zu kommunizieren,
- Mittel, um Meldungen zwischen der Informatikeinrichtung (A) und den Informatikeinrichtungen zu blocken, mit denen der Benutzer (U) nicht berechtigt ist zu kommunizieren.

27. Vorrichtung nach Anspruch 22, **dadurch gekennzeichnet, dass** das Authentifizierungsmodul, das mit der Vorrichtung verbunden ist, außerdem Folgendes bereitstellt:
- einen persönlichen Codierungsschlüssel, der die Vorrichtung (D) personalisiert.

28. Vorrichtung nach Anspruch 27, **dadurch gekennzeichnet, dass** die Sicherheitsparameter außerdem Folgendes umfassen:
- eine Liste der Informatikeinrichtungen, mit denen der Benutzer (U) berechtigt ist auf codierte Weise zu kommunizieren,
- den öffentlichen Codierungsschlüssel für eine jede Informatikeinrichtung, mit der der Benutzer (U) berechtigt ist, auf codierte Weise zu kommunizieren.

29. Vorrichtung nach Anspruch 28, **dadurch gekennzeichnet, dass** sie außerdem Folgendes umfasst:
- ein Codierungsmodul, um die Kommunikationen durch Kombination des persönlichen Codierungsschlüssels der Vorrichtung (D) mit dem öffentlichen Codierungsschlüssel der Informatikeinrichtung zu codieren, mit der der Benutzer (U) berechtigt ist, auf codierte Weise zu kommunizieren.
